(19) Europäisches Patentamt
European Patent Office
Office européen des brevets

(11) **EP 4 292 671 A1**

(12) **EUROPEAN PATENT APPLICATION**

(43) Date of publication:
**20.12.2023  Bulletin 2023/51**

(51) International Patent Classification (IPC):
**A62B 27/00** (2006.01)  **A62B 18/00** (2006.01)
**A62B 18/02** (2006.01)  **A62B 18/08** (2006.01)

(21) Application number: **23178887.8**

(22) Date of filing: **13.06.2023**

(52) Cooperative Patent Classification (CPC):
**A62B 18/006; A62B 18/02; A62B 18/08;
A62B 27/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022  CN 202210685885**

(71) Applicant: **Honeywell International Inc.
Charlotte, NC 28202 (US)**

(72) Inventors:
• **HAN, Xiaojin
  Charlotte, 28202 (US)**
• **DUAN, Licong
  Charlotte, 28202 (US)**
• **CHEN, En Yi
  Charlotte, 28202 (US)**

(74) Representative: **Haseltine Lake Kempner LLP
Cheapside House
138 Cheapside
London EC2V 6BJ (GB)**

(54) **METHODS, APPARATUSES, AND SYSTEMS FOR EVALUATING RESPIRATORY PROTECTIVE DEVICES**

(57) Apparatuses and methods for evaluating a respiratory protective device are provided. For example, an example method includes retrieving a plurality of pressure measurement data objects and a plurality of fan operation data objects associated with the respiratory protective device, generating a performance parameter data object based on the plurality of pressure measurement data objects and the plurality of fan operation data objects, determining a performance criterion data object corresponding to the performance parameter data object, and generating a performance indication data object based on comparing the performance parameter data object with the performance criterion data object.

FIG. 1

**Description**

**FIELD OF THE INVENTION**

Example embodiments of the present disclosure relate generally to respiratory protective devices and, more particularly, to methods, apparatuses, and systems for evaluating the performance of respiratory protective devices.

**BACKGROUND**

Applicant has identified many technical challenges and difficulties associated with masks. For example, there is a lack of method to evaluate the performance of masks.

**BRIEF SUMMARY**

Various embodiments described herein relate to methods, apparatuses, and systems for evaluating the performance of respiratory protective devices are provided.

In accordance with various embodiments of the present disclosure, an apparatus for evaluating a respiratory protective device is provided. In some embodiments, the respiratory protective device comprises a fan component and a pressure sensor component. In some embodiments, the apparatus comprises at least one processor and at least one non-transitory memory comprising program code. In some embodiments, the at least one non-transitory memory and the program code are configured to, with the at least one processor, cause the apparatus to at least: retrieve a plurality of pressure measurement data objects and a plurality of fan operation data objects associated with the respiratory protective device; generate a performance parameter data object based on the plurality of pressure measurement data objects and the plurality of fan operation data objects; determine a performance criterion data object corresponding to the performance parameter data object; and generate a performance indication data object based on comparing the performance parameter data object with the performance criterion data object. In some embodiments, the performance parameter data object comprises at least one of a trigger pressure parameter, a trigger percentage parameter, a latency time parameter, or an air supply parameter.

In some embodiments, each of the plurality of pressure measurement data objects comprises a pressure measurement parameter associated with the pressure sensor component and a time code parameter correlating to the pressure measurement parameter.

In some embodiments, each of the plurality of fan operation data objects comprises a fan control parameter associated with the fan component and a time code parameter correlating to the fan control parameter.

In some embodiments, the fan control parameter indicates at least one of a voltage value associated with the fan component or at least a current value associated with the fan component.

In some embodiments, when generating the performance parameter data object, the at least one non-transitory memory and the program code are configured to, with the at least one processor, cause the apparatus to: generate, based on the plurality of pressure measurement data objects, a breathing pattern graph object indicating a plurality of pressure-time data correlations between a plurality of pressure measurement parameters and a plurality of time code parameters; and generate, based on the plurality of fan operation data objects, an air supply graph object indicating a plurality of fan-time data correlations between a plurality of fan control parameters and the plurality of time code parameters.

In some embodiments, the performance parameter data object comprises the trigger pressure parameter. In some embodiments, the at least one non-transitory memory and the program code are configured to, with the at least one processor, cause the apparatus to: select at least one time code parameter from the plurality of time code parameters based on the plurality of fan-time data correlations,; determine at least one pressure measurement parameter from the plurality of pressure measurement parameters corresponding to the at least one time code parameter; and calculate the trigger pressure parameter based at least in part on the at least one pressure measurement parameter. In some embodiments, the at least one time code parameter indicates at least one fan triggering time point associated with the fan component.

In some embodiments, the performance parameter data object comprises the trigger percentage parameter. In some embodiments, the at least one non-transitory memory and the program code are configured to, with the at least one processor, cause the apparatus to: calculate a breath count associated with a sample time period based at least in part on the breathing pattern graph object; calculate a fan operation count associated with the sample time period based at least in part on the air supply graph object; and calculate the trigger percentage parameter based at least in part on the breath count and the fan operation count.

In some embodiments, the performance parameter data object comprises the latency time parameter. In some embodiments, the at least one non-transitory memory and the program code are configured to, with the at least one processor, cause the apparatus to: determine at least one fan triggering time code parameter from the plurality of time code parameters based on the plurality of fan-time data correlations; determine at least one inhalation starting time code parameter from the plurality of time code parameters based on the plurality of pressure-time data correlations; and calculate the latency time parameter based at least in part on the at least one fan triggering time code parameter and the at least one inhalation starting time code parameter.

In some embodiments, the performance parameter data object comprises the air supply parameter. In some embodiments, the at least one non-transitory memory and the program code are configured to, with the at least one processor, cause the apparatus to: determine a sample time period associated with the respiratory protective device; determine one or more fan control parameters from the plurality of fan control parameters that are associated with the sample time period; and calculate the air supply parameter based at least in part on the one or more fan control parameters.

In accordance with various embodiments of the present disclosure, a computer-implemented method for evaluating a respiratory protective device is provided. In some embodiments, the respiratory protective device comprises a fan component and a pressure sensor component. In some embodiments, the computer-implemented method comprises: retrieving a plurality of pressure measurement data objects and a plurality of fan operation data objects associated with the respiratory protective device; generating a performance parameter data object based on the plurality of pressure measurement data objects and the plurality of fan operation data objects; determining a performance criterion data object corresponding to the performance parameter data object; and generating a performance indication data object based on comparing the performance parameter data object with the performance criterion data object. In some embodiments, the performance parameter data object comprises at least one of a trigger pressure parameter, a trigger percentage parameter, a latency time parameter, or an air supply parameter.

In accordance with various embodiments of the present disclosure, a computer program product for evaluating a respiratory protective device is provided. In some embodiments, the computer program product comprises at least one non-transitory computer-readable storage medium having computer-readable program code portions stored therein. In some embodiments, the computer-readable program code portions comprise an executable portion configured to: retrieve a plurality of pressure measurement data objects and a plurality of fan operation data objects associated with the respiratory protective device; generate a performance parameter data object based on the plurality of pressure measurement data objects and the plurality of fan operation data objects; determine a performance criterion data object corresponding to the performance parameter data object; and generate a performance indication data object based on comparing the performance parameter data object with the performance criterion data object. In some embodiments, the performance parameter data object comprises at least one of a trigger pressure parameter, a trigger percentage parameter, a latency time parameter, or an air supply parameter.

The foregoing illustrative summary, as well as other exemplary objectives and/or advantages of the disclosure, and the manner in which the same are accomplished, are further explained in the following detailed description and its accompanying drawings.

**BRIEF DESCRIPTION OF THE DRAWINGS**

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:

FIG. 1 illustrates an example perspective view of an example respiratory protective device in accordance with some example embodiments described herein;
FIG. 2A illustrates an example exploded view of an example mask component in accordance with some example embodiments described herein;
FIG. 2B illustrates another example exploded view of an example mask component in accordance with some example embodiments described herein;
FIG. 2C illustrates another example exploded view of an example mask component in accordance with some example embodiments described herein;
FIG. 2D illustrates an example back view of an example mask component in accordance with some example embodiments described herein;
FIG. 3 illustrates an example circuit diagram of an example respiratory protective device in accordance with some example embodiments described herein;
FIG. 4 illustrates an example block diagram of a respiratory protective device evaluation environment in accordance with some example embodiments described herein;
FIG. 5 illustrates an example method of generating an example performance indication data object in accordance with some embodiments of the present disclosure;

FIG. 6 illustrates an example rendering of an example breathing pattern graph object and an example rendering of an example air supply graph object in accordance with some embodiments of the present disclosure;

FIG. 7 illustrates an example method of calculating an example trigger pressure parameter in accordance with some embodiments of the present disclosure;

FIG. 8 illustrates an example method of calculating an example trigger percentage parameter in accordance with some embodiments of the present disclosure;

FIG. 9 illustrates an example method of calculating an example latency time parameter in accordance with some embodiments of the present disclosure; and

FIG. 10 illustrates an example method of calculating an example air supply parameter in accordance with some embodiments of the present disclosure.

## DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "electronically coupled," "electronically coupling," "electronically couple," "in communication with," "in electronic communication with," or "connected" in the present disclosure refers to two or more elements or components being connected through wired means and/or wireless means, such that signals, voltage/current, data and/or information may be transmitted to and/or received from these elements or components.

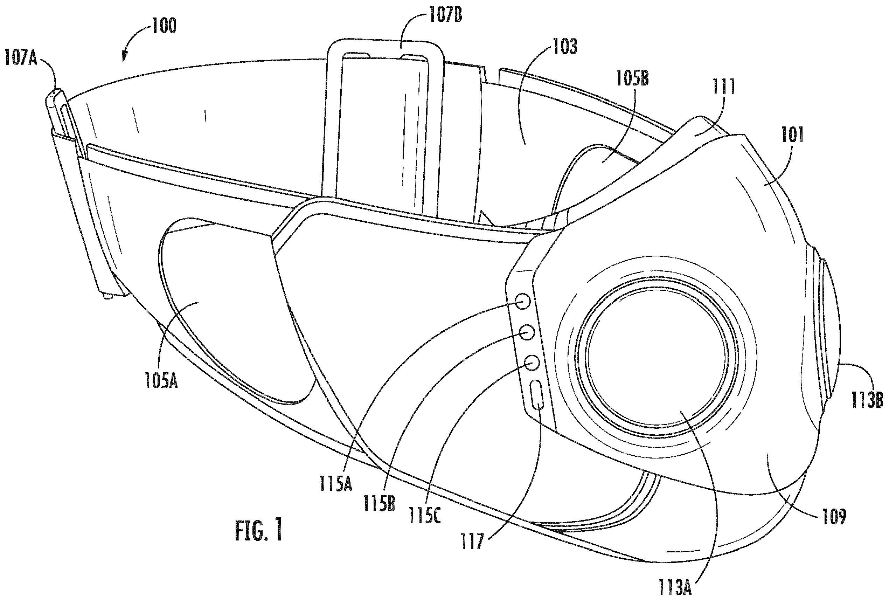

Referring now to FIG. 1, an example perspective view of an example respiratory protective device (also referred to as a respiratory protective equipment) 100 in accordance with some example embodiments described herein is illustrated.

In some embodiments, the example respiratory protective device 100 is in the form of a respirator or a mask. For example, as shown in FIG. 1, the example respiratory protective device 100 comprises a mask component 101 and a strap component 103.

In some embodiments, the strap component 103 may be in the form of a mask strap. For example, in some embodiments, the strap component 103 may comprise elastic material(s) such as, but not limited to, polymers, thermoplastic elastomer (TPE), and/or the like. In some embodiments, the elastic material may allow the example respiratory protective device 100 to be secured to a user's face.

In some embodiments, the strap component 103 may comprise an ear opening 105A and an ear opening 105B. When the example respiratory protective device 100 is worn by a user, the ear opening 105A and the ear opening 105B may allow the user's left ear and the right ear to pass through.

In some embodiments, the strap component 103 may be inserted through one or more strap bucket components (such as a strap bucket component 107A and a strap bucket component 107B as shown in FIG. 1). In some embodiments, the one or more strap bucket components may be in the form of one or more buckles that include, but not limited to, a tri-glide buckle, and may allow a user to adjust the length of the strap component 103 so that the example respiratory protective device 100 can be secured to a user's face.

In some embodiments, the mask component 101 is connected to the strap component 103. For example, a first end of the strap component 103 is connected to a first end of the mask component 101, and a second end of the strap component 103 is connected to a second of the mask component 101. In this example, the first end of the mask component 101 is opposite to the second end of the mask component 101. In the example shown in FIG. 1, an end of the strap component 103 may be secured to the mask component 101 via a fastener component 117 (such as, but not limited to, a snap button).

In some embodiments, the mask component 101 may be in the form of a mask or a respirator. For example, as shown in FIG. 1, the mask component 101 may comprise an outer shell component 109 and a face seal component 111.

In some embodiments, when the example respiratory protective device 100 is worn by a user, an outer surface of the outer shell component 109 is exposed to the outside environment. In some embodiments, the face seal component 111 is attached to and extends from a periphery and/or edge of the outer shell component 109 (or an inner shell component of the mask component as described herein).

In particular, the face seal component 111 may comprise soft material such as, but not limited to, silica gel, fluorocarbon elastomer, and/or the like. In some embodiments, when the example respiratory protective device 100 is worn by a user, the face seal component 111 is in contact with the user's face, and may seal the example respiratory protective device 100 to at least a portion of a user's face. As described above, the example respiratory protective device 100 includes strap component 103 that allows the example respiratory protective device 100 to be secured to the user's face. As such, the face seal component 111 can create at least partially enclosed (or entirely enclosed) space between at least a portion of the user's face (e.g. mouth, nostrils, etc.), details of which are described herein.

In some embodiments, the mask component 101 comprises one or more puck components that cover one or more inhalation filtration components of the example respiratory protective device 100. For example, as shown in FIG. 1, the example respiratory protective device 100 comprises a left puck component 113A that is disposed on a left side of the outer shell component 109 and a right puck component 113B that is disposed on a right side of the outer shell component 109. In such an example, the left puck component 113A covers a left inhalation filtration component that is disposed on the left side of the mask component 101, and the right puck component 113B covers a right inhalation filtration component that is disposed on the right side of the mask component 101, details of which are described herein.

In some embodiments, the mask component 101 comprises one or more key components (such as, but not limited to, the key component 115A, the key component 115B, and the key component 115C) that may allow a user to manually control the operations of the fan component of the mask component 101 and/or other devices (such as, but not limited to, earphones) that are in electronic communication with the example respiratory protective device 100.

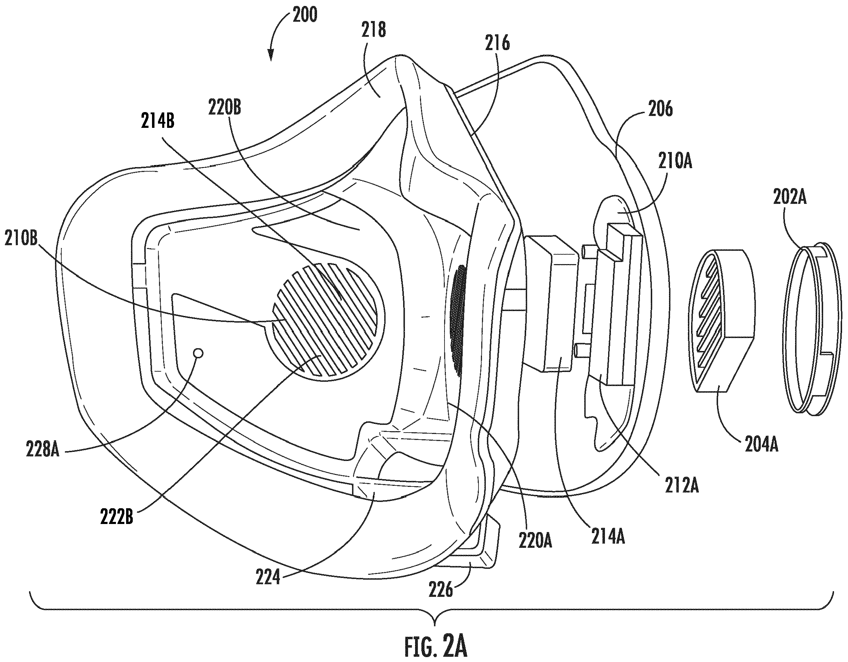

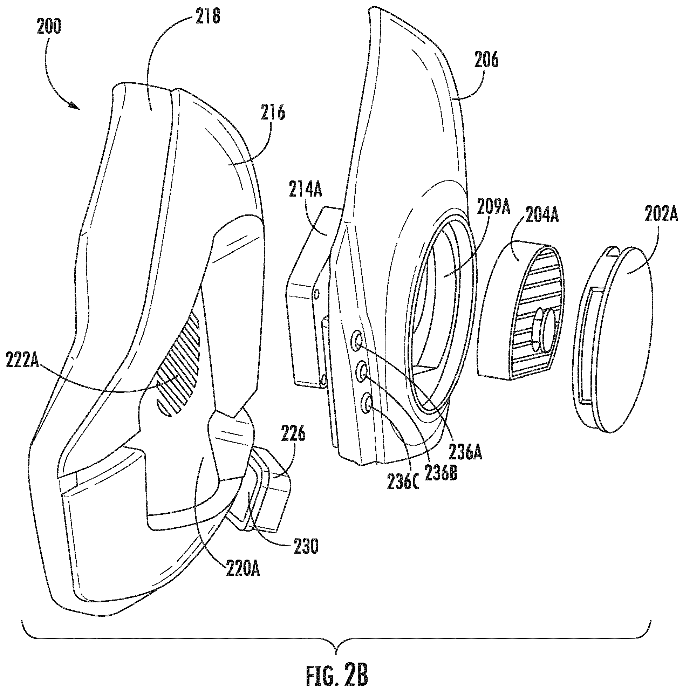

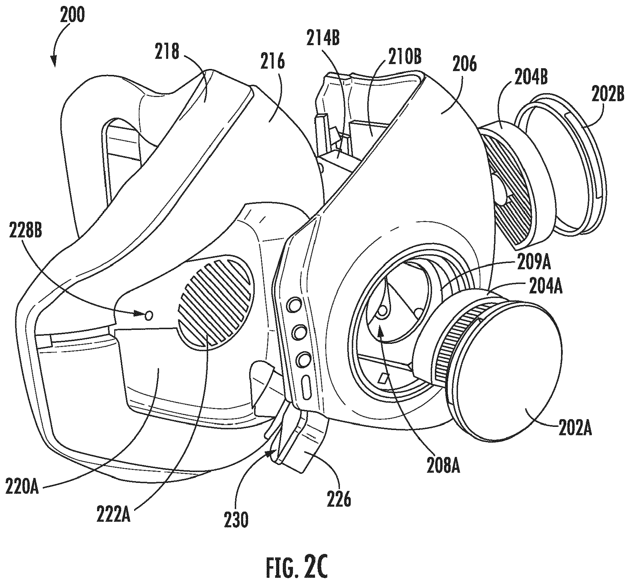

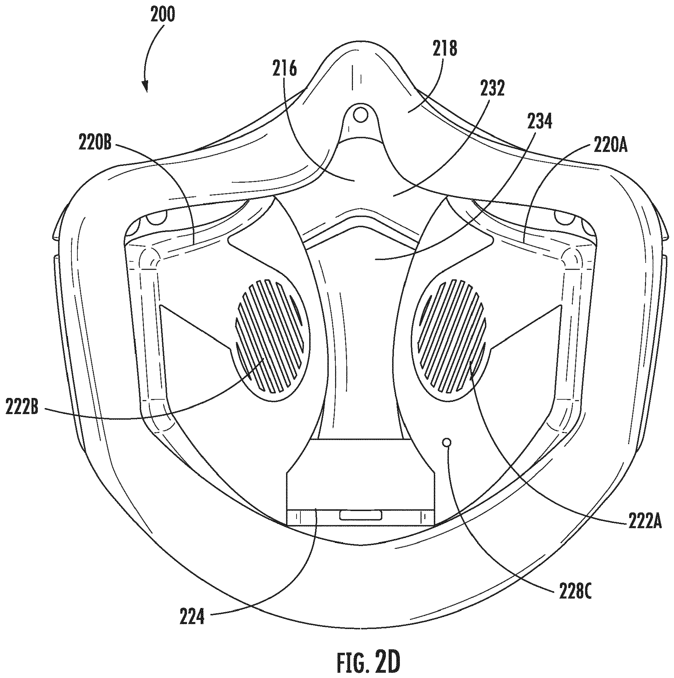

Referring now to FIG. 2A, FIG. 2B, FIG. 2C, and FIG. 2D, examples views of an example mask component 200 in accordance with some example embodiments described herein are illustrated. In particular, FIG. 2A to FIG. 2C illustrate example exploded views of the example mask component 200, and FIG. 2D illustrates an example back view of the example mask component 200.

As shown in FIG. 2A, the mask component 200 comprises an outer shell component 206 and an inner shell component 216.

In some embodiments, the inner shell component 216 is in a shape that is based on the contour of the user's face. In particular, when the mask component 200 is worn by a user, at least a portion of the user's face (such as, but not limited to, mouth, nostrils) are housed within the inner shell component 216.

In some embodiments, the mask component 200 may comprise a face seal component 218. In some embodiments, the face seal component 218 is attached to and extends from a periphery and/or edge of the inner shell component 216. Similar to the face seal component 111 described above in connection with FIG. 1, the face seal component 218 may comprise soft material such as, but not limited to, silica gel, fluorocarbon elastomer, and/or the like.

In some embodiments, when the mask component 200 is worn by a user, the face seal component 218 and an inner surface of the inner shell component 216 create an enclosed space on at least a portion of the user's face (e.g. on the mouth, nostrils, etc.).

Similar to the inner shell component 216 described above, the shape of the outer shell component 206 may be based on a contour of the user's face. In some embodiments, when the mask component 200 is assembled, the inner surface of the outer shell component 206 is secured to an outer surface of the inner shell component 216. In some embodiments, the inner shell component 216 may comprise one or more indentation portions on the outer surface of inner shell component 216.

For example, referring now to FIG. 2A and FIG. 2B, the inner shell component 216 may comprise inner shell indentation portions such as, but not limited to, an inner shell indentation portion 220A that is on a left side of the mask component 200 and an inner shell indentation portion 220B that is on a right side of the mask component 200. In particular, each of the inner shell indentation portion 220A and inner shell indentation portion 220B may be sunken or depressed from the outer surface of inner shell component 216. As such, when the outer shell component 206 is secured to the inner shell component 216, the indentation portions may create space that houses components such as, but not limited to, electronic components.

Referring back to FIG. 2A, in some embodiments, one or more circuit board components (such as, but not limited to, a circuit board component 210A), one or more charging circuit components (such as, but not limited to, a charging circuit component 212A), and one or more fan components (such as, but not limited to, a fan component 214A) may be disposed in the space that is defined by the outer surface of the inner shell indentation portion 220A and the inner surface of the outer shell component 206. Similarly, one or more circuit board components (such as, but not limited to, a circuit board component 21 0B), one or more charging circuit components, and one or more fan components (such as, but not limited to, a fan component 214B) may be disposed in the space that is defined by the outer surface of the inner shell indentation portion 220B and the inner surface of the outer shell component 206. For example, the fan component 214A may be disposed on the right side of the example mask component 200 and the fan component 214B may be disposed on the left side of the example mask component 200.

In some embodiments, the circuit board component 210A comprises a circuit board (such as, but not limited to a printed circuit board (PCB)) where other electronic components can be secured to and be in electronic communications with one another. For example, a controller component, the charging circuit component 212A and the fan component 214A may be secured to the circuit board component 210A and be in electronic communication with one another.

In some embodiments, the charging circuit component 212A may comprise a charging circuit and/or a battery that supplies power to the controller component and/or the fan component 214A. For example, the charging circuit may include a Universal Serial Bus (USB) charger circuit that is connected to a rechargeable battery.

In some embodiments, the fan component 214A may comprise an electric fan. In some embodiments, the electric fan of the fan component 214A may operate at different rotation speeds. For example, the fan component 214A may be a stepped fan that provides different, predetermined settings for the rotation speeds. Additionally, or alternatively, the fan component 214A may be a stepless fan that enables continuous adjustment of the rotation speed.

In some embodiments, the electric fan of the fan component 214A may operate at different rotational directions. For example, the fan component 214A may operate in a forward direction or a reverse direction. As an example, when the fan component 214A operates in the forward rotational direction, the electric fan of the fan component 214A may rotate counter-clockwise (when viewing from a user wearing the mask component 200) and/or may operate as a blower that draws air from outside the mask component 200 to inside the mask component 200. As another example, when the fan component 214A operates in the reverse rotational direction, the electric fan of the fan component 214A may rotate clockwise (when viewing from a user wearing the mask component 200) and/or may operate as an exhaust/ventilation fan that draws air from inside the mask component 200 to outside the mask component 200.

While the description above provides examples of the rotational directions of the electric fan of the fan component 214A , it is noted that the scope of the present disclosure is not limited to the description above. In some examples, the electric fan of the fan component 214A may rotate clockwise and operate as a blower. Additionally, or alternatively, the electric fan of the fan component 214A may rotate counter-clockwise and operate as an exhaust/ventilation fan.

In some embodiments, the start time, the stop time, the rotational directions (e.g. forward direction or reverse direction) and/or the rotation speed of the electric fan of the fan component 214A may be controlled and/or adjusted by the controller component.

For example, the controller component may transmit a forward rotation start signal to the fan component 214A that causes the fan component 214A to start forward rotation (e.g. a start signal to trigger the fan component 214A to operate as a blower that draws air from outside the mask component 200 towards inside the mask component 200). In some embodiments, the forward rotation start signal may include a forward rotation speed value that indicates the speed for the fan component 214A. Additionally, or alternatively, the controller component may transmit a forward rotation stop signal to the fan component 214A that causes the fan component 214A to stop forward rotation.

Additionally, or alternatively, the controller component may transmit a reverse rotation start signal to the fan component 214A that causes the fan component 214A to start reverse rotation (e.g. a start signal to trigger the fan component 214A to operate as an exhaust fan that draws air from inside the mask component 200 towards outside the mask component 200). In some embodiments, the reverse rotation start signal may include a reverse rotation speed value that indicates the speed for the fan component 214A. Additionally, or alternatively, the controller component may transmit a reverse rotation stop signal to the fan component 214A that causes the fan component 214A to stop reverse rotation.

Referring now to FIG. 2C, the mask component 200 may comprise one or more inhalation filtration components (such as, but not limited to, inhalation filtration component 204A and inhalation filtration component 204B) and one or more puck components (such as, but not limited to puck component 202A and puck component 202B).

In some embodiments, each of the one or more inhalation filtration components may comprise a filter media element that comprises filter material for filtering air. Examples of filter material include, but are not limited to, HEPA filters. In some embodiments, each of the one or more puck components may be positioned to cover one of the inhalation filtration components so as to prolong the lifespan of the mask component 200. For example, the puck component 202A may cover the inhalation filtration component 204A, and the puck component 202B may cover the inhalation filtration component 204B.

As shown in FIG. 2C, the outer shell component 206 of the example mask component 200 may comprise one or more outer shell indentation portions (such as the outer shell indentation portion 209A). In particular, each of the outer shell indentation portion 209A may be sunken or depressed from the outer surface of outer shell component 206. In some embodiments, one or more inhalation filtration components may be disposed in the outer shell indentation portions. For example, as shown in FIG. 2C, an inhalation filtration component 204A is disposed in the outer shell indentation portion 209A.

In some embodiments, each of the one or more outer shell indentation portions may comprise an air inlet opening, and each of the one or more inner shell indentation portions may comprise one or more air inlet slots. In some embodiments, when the mask component 200 is assembled and in use, the air inlet opening on the outer shell indentation portion is aligned with the one or more air inlet slots on the inner shell indentation portion.

For example, as shown in FIG. 2C, the air inlet opening 208A on the outer shell indentation portion 209A of the outer shell component 206 is aligned with the air inlet slots 222A on the inner shell indentation portion 220A of the inner shell component 216.

In this example, when the mask component 200 is worn by a user and the user inhales, air is drawn from the outside environment and travels through the inhalation filtration component 204A, through the air inlet opening 208A, through the air inlet slots 222A, and arrive at the user's mouth or nostrils. As described above and shown in FIG. 2A and FIG. 2B, the fan component 214A is disposed on the inner shell indentation portion 220A (where the air inlet slots 222A are located). In some embodiments, when the user inhales, the fan component 214A may operate in a forward direction and/or operate as a blower that draws air from outside the mask component 200 towards inside the mask component 200, thereby facilitating the inhaling of the user. Additionally, or alternatively, when the user exhales, the fan component 214A may operate in a reverse direction and/or operate as an exhaust fan that draws air from inside the mask component 200 towards outside the mask component 200, thereby facilitating the exhaling of the user.

Referring now to FIG. 2D, an example back view of the example mask component 200 is provided. In particular, FIG. 2D illustrates the view of the example mask component 200 when it is worn by a user and viewed by the user.

As shown in FIG. 2D, the example mask component 200 may comprise air inlet slots 222A that are located on the middle right side of the inner shell component 216, and air inlet slots 222B that are located on the middle left side of the inner shell component 216. For example, the inner surface 232 of the inner shell component 216 may comprise a nose portion 234, where a user may put his or her nose when the mask component 200 is worn. In this example, the air inlet slots 222A may be located to the right of the nose portion 234, and the air inlet slots 222B may be located to the left of the nose portion 234.

In some embodiments, the example mask component 200 may comprise an outlet opening 224 that is on a middle bottom portion of the inner shell component 216. In some embodiments, the outlet opening 224 may be located corresponding to the position of the user's mouth. For example, when a user exhales, the breath may be released through the outlet opening 224.

As shown in FIG. 2A to FIG. 2C, an exhalation filtration component 226 may be connected to the inner shell component 216 at the outlet opening 224. For example, the exhalation filtration component 226 may cover the outlet opening 224. In some embodiments, the exhalation filtration component 226 may comprise a filter media element that comprise filter material for filtering air. Examples of filter material include, but are not limited to, HEPA filters. As such, the breath that is exhaled by the user may be filtered before it is released from inside the mask component 200 to the outside environment.

In some embodiments, the exhalation filtration component 226 may comprise a humidity sensor component 230 that at least partially covers the outlet opening 224 of the inner shell component 216. The humidity sensor component 230 may comprise a humidity sensor that may, for example but not limited to, detect humidity levels within the enclosed space and/or in the breath exhaled by the user. Examples of the humidity sensor component 230 include, but are not limited to, capacitive humidity sensors, resistive humidity sensors, thermal humidity sensors, and/or the like. In some embodiments, the humidity sensor component 230 is in electronic communication with the controller component, and may transmit humidity indications to the controller component indicating the detected humidity levels (for example, relative humidity levels).

In some embodiments, the mask component 200 may comprise one or more pressure sensor components. As described above and as shown in FIG. 2B, when the mask component 200 is worn by a user, the face seal component 218 and an inner surface 232 of the inner shell component 216 create an enclosed space on at least a portion of the user's face (e.g. on the mouth, nostrils, etc.). In some embodiments, a pressure sensor component may comprise a pressure sensor that detects the air pressure within this enclosed space. Examples of the pressure sensor components include, but are not limited to, barometric pressure sensors, resistive air pressure transducer or strain gauge, capacitive air pressure transducer, airflow velocity sensors, inductive air pressure transducer, spirometers, pneumotachometers, and/or the like.

For example, as shown in FIG. 2A, a pressure sensor component 228A may be disposed on an inner surface of the inner shell component 216. Additionally, or alternatively, as shown in FIG. 2C, a pressure sensor component 228B may be disposed on the inner shell indentation portion 220A of the inner shell component 216. Additionally, or alternatively, as shown in FIG. 2D, a pressure sensor component 228C may be disposed on the inner surface of the inner shell component 216. The pressure sensor component 228A, the pressure sensor component 228B, and/or the pressure sensor component 228C may detect the air pressure within the enclosed space defined by the face seal component 218 and the inner shell component 216 on at least a portion of the user's face.

In some embodiments, the one or more pressure sensor components are in electronic communication with the controller component, and may transmit air pressure indications to the controller component indicating the detected air pressure. For example, each of the air pressure indications may comprise an air pressure value that corresponds to the air pressure in the enclosed space as defined by the face seal component 218 and the inner shell component 216.

While the description above provides an example mask component, it is noted that the scope of the present disclosure is not limited to the description above. In some examples, an example mask component may comprise one or more additional and/or alternative elements. For example, an example mask component may comprise less than two or more than two fan components. Additionally, or alternatively, an example mask component may comprise less than two or more than two inhalation filtration components.

In some embodiments, mask component 200 may include one or more key components, such as, but not limited to, a key component 236A, a key component 236B, and a key component 236C. In some embodiments, the one or more key components may be disposed on an outer surface of the outer shell component 206. Each of the one or more key components may provide a button that allows a user to control and/or adjust the operations of various electronic components described herein (such as, but not limited to, fan components, earphones, and/or the like).

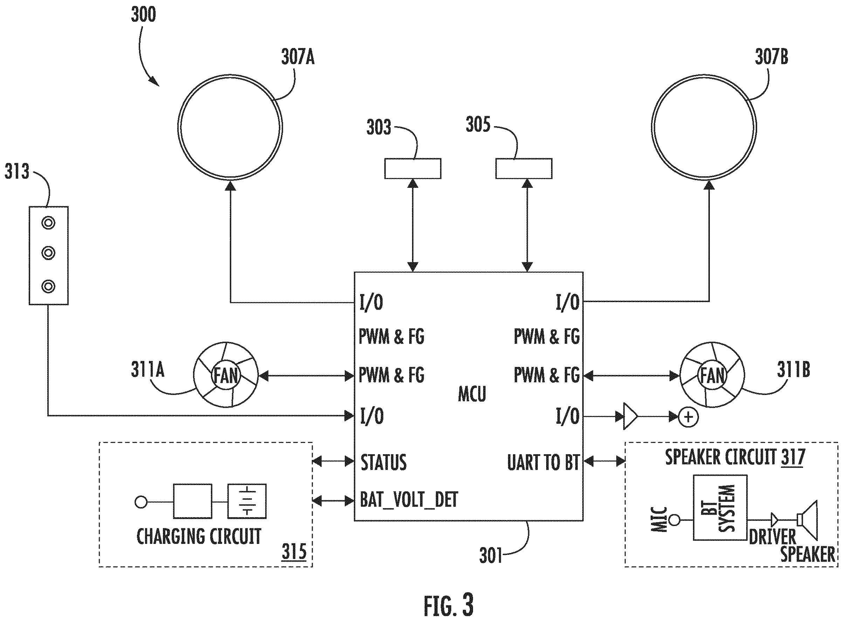

Referring now to FIG. 3, an example circuit diagram of an example respiratory protective device 300 in accordance with some example embodiments described herein is illustrated. In particular, FIG. 3 illustrates example electronic components of an example respiratory protective device in accordance with various example embodiments of the present disclosure.

As shown in FIG. 3, the example respiratory protective device 300 may comprise a controller component 301 that is in electronic communications with other components such as, but not limited to, the pressure sensor component 303, the humidity sensor component 305, a light 307A and a light 307B that are disposed on one or more puck components, fan component 311A, fan component 311B, key components 313, and/or the speaker circuit 317.

In some embodiments, the controller component 301 may be embodied as means including one or more microprocessors with accompanying digital signal processor(s), one or more processor(s) without an accompanying digital signal processor, one or more coprocessors, one or more multicore processors, one or more controllers, processors, one or more computers, various other processing elements including integrated circuits such as, for example, an application specific integrated circuit (ASIC), programmable logic controller (PLC) or field programmable gate array (FPGA), or some combination thereof. Accordingly, although illustrated in FIG. 3 as a single processor, in an embodiment, the controller component 301 may include a plurality of processors and signal processing modules. The plurality of processors may be in operative communication with each other and may be collectively configured to perform one or more functionalities as described herein. In an example embodiment, the controller component 301 may be configured to execute instructions stored in a memory circuitry or otherwise accessible to the controller component. Thus, the controller component 301 used herein may refer to a programmable microprocessor, microcomputer or multiple processor chip or chips that can be configured by software instructions (applications) to perform a variety of functions.

In some embodiments, the memory circuitry may include suitable logic, circuitry, and/or interfaces that are adapted to store a set of instructions that is executable by the controller component 301 to perform predetermined operations. Some of the commonly known memory implementations include, but are not limited to, a hard disk, random access memory, cache memory, read only memory (ROM), erasable programmable read-only memory (EPROM) & electrically erasable programmable read-only memory (EEPROM), flash memory, magnetic cassettes, magnetic tape, magnetic disk storage or other magnetic storage devices, a compact disc read only memory (CD-ROM), digital versatile disc read only memory (DVD-ROM), an optical disc, circuitry configured to store information, or some combination thereof. In an example embodiment, the memory circuitry may be integrated with the controller component 301 on a single chip, without departing from the scope of the disclosure.

In some embodiments, the pressure sensor component 303 may transmit pressure measurement data objects to the controller component 301. As described above, each of the pressure measurement data objects may comprise a pressure measurement parameter that indicates the value of air pressure in the enclosed space as defined by the face seal component 218 and the inner shell component 216.

In some embodiments, the humidity sensor component 305 may transmit humidity indications to the controller component 301. As described above, the humidity indications may indicate relative humidity levels within the example respiratory protective device. For example, the humidity indications may indicate relative humidity levels within the enclosed space defined by the face seal component and the inner shell component of the respiratory protective device on at least a portion of the user's face.

In some embodiments, the controller component 301 may transmit control signals to the light 307A and/or the light 307B so as to adjust the color and/or intensity of the light emitted by the light 307A and/or the light 307B.

In some embodiments, the controller component 301 may transmit forward rotation start signals to the fan component 311A and/or the fan component 311B to cause the fan component 311A and/or the fan component 311B to start forward rotation. In some embodiments, the controller component 301 may transmit forward rotation stop signals to the fan component 311A and/or the fan component 311B to cause the fan component 311A and/or the fan component 311B to stop forward rotation.

In some embodiments, the controller component 301 may transmit reverse rotation start signals to the fan component 311A and/or the fan component 311B to cause the fan component 311A and/or the fan component 311B to start reverse rotation. In some embodiments, the controller component 301 may transmit reverse rotation stop signals to the fan component 311A and/or the fan component 311B to cause the fan component 311A and/or the fan component 311B to stop reverse rotation.

In some embodiments, the controller component 301 is in electronic communication with the key components 313. For example, when a user presses a button on the key components 313, the key components 313 may transmit a signal to the controller component 301.

In some embodiments, the controller component 301 is in electronic communication with the speaker circuit 317. For example, the controller component 301 may transmit control signals to an earphone in the speaker circuit 317 so as to adjust volume, noise canceling mode, and/or the like of the earphone.

In some embodiments, the charging circuit 315 supplies power to controller component 301 and one or more other electronic components shown in FIG. 3 (such as, but not limited to, the fan component 311A and the fan component 311B).

As illustrated above in connection with FIG. 1 to FIG. 3, an example respiratory protective device in accordance with some embodiments of the present disclosure may comprise a fan component, which improvs breathing responsivity and facilitates a user's inhaling and exhaling while wearing the example respiratory protective device. In some embodiments, an example respiratory protective device comprises a pressure sensor component that detects the pressure inside the mask component of the example respiratory protective device. Based on the detected pressure, the breathing pattern of the user can be determined and monitored. In some embodiments, an example respiratory protective device described above may be in the form of a breathing responsive powered air purified respirator (PAPR) that provides better breathing experience, improves the service lifetime of the inhalation filtration component and exhalation filtration component, improves the battery runtime of the PAPR, improves the lifetime of the fan component, and reduces the noise when the fan component is in operation.

As illustrated above, one of the key performance requirements for respiratory protective devices (such as breathing responsive PAPRs) is the man-machine breathing synchronization. The term "man-machine breathing synchronization" refers to the synchronization between the breathing patterns of the user and the operations of the fan component in the respiratory protective device. In other words, the control of the operations of the fan components needs to match the breathing patterns of the user.

For example, when an example respiratory protective device has a good level of man-machine breathing synchronization, the fan component starts to operate when the user starts to inhale and ceases to operate when the user starts to exhale. In such an example, the fan component operates and draws air into the example respiratory protective device when the user inhales, so that the user can breathe more easily while wearing the respiratory protective device, thereby improving user experience of wearing the respiratory protective device. As another example, when an example respiratory protective device has a low level of man-machine breathing synchronization, there may be a significant time delay between the start of the user's inhalation and the start of operation of the fan component, and/or a significant time delay between the end of the user's inhalation and the end of operation of the fan component. In such an example, the operation of the fan component does not sufficiently improve the breathing experience of the user wearing the respiratory protective device, and may further hinder the breathing of the user.

One of many technical and challenges associated with the respiratory protective devices (including breathing responsive PAPRs) is the lack of scientific measurement parameters and approaches for evaluating the performance of respiratory protective devices (including breathing responsive PAPRs), especially a lack of devices and methods for evaluating the man-machine synchronization performance of respiratory protective devices. Government agencies such as the National Institute for Occupational Safety and Health (NIOSH), the Centers for Disease Control and Prevention (CDC), and the Food and Drug Administration (FDA) do not provide specific guidance, standard, test, method, or procedure on evaluating the man-machine synchronization performance of respiratory protective devices. For example, the CDC provides Procedure No. RCT-APR-0065-508 for "Determination of Air Flow Resistance." However, such a procedure does not evaluate man-machine breathing synchronization. Guidance, standards, tests, methods, and procedures from other countries (including the European Standard (EN), the Japanese Industrial Standards (JIS), the National Standards of the People's Republic of China (GB), and the AS standard) also do not evaluate the man-machine synchronization performance of respiratory protective devices. For example, Standard No. T/BAOSPTS 001-2020 (Technical Code for Breath-Following Powered Air-Purifying Respirator) is used by the China mining industry, but such a standard does not evaluate the precision and the accuracy of response time of breath-following (RTBF) of respiratory protective devices.

The lack of devices and methods for evaluating the man-machine synchronization performance of respiratory protective devices causes many technical challenges and difficulties. As the performance of respiratory protective devices (especially the man-machine synchronization performance) cannot be quantitatively evaluated, whether the respiratory protective device satisfies safety requirements in workplaces cannot be determined. As such, a worker may use a respiratory protective device that does not satisfy the safety requirements, thereby endangering the life and well-being of the worker.

In addition, the performance of respiratory protective devices (especially the man-machine synchronization performance) can deteriorate over time. For example, the sensitivity of the pressure sensor component can reduce over time due to tear and wear, which in turn can impact the man-machine synchronization performance of the respiratory protective device. Because performance of respiratory protective devices cannot be quantitatively evaluated, a user cannot determine when the respiratory protective devices need to be repaired or replaced.

Various embodiments of the present disclosure overcome these technical challenges and difficulties, and provide various technical benefits and advancements. For example, various embodiments of the present disclosure provide an example respiratory protective device evaluation system that can generate performance parameter data objects and performance indication data objects that quantitively and qualitatively evaluate the performance of respiratory protective devices. The performance parameter data objects provide quantitative measures on the performance of the respiratory protective device, including the man-machine synchronization performance. The performance indication data objects provide qualitative measures on the performance of the respiratory protective device, including the man-machine synchronization performance.

Various embodiments of the present disclosure enable a user to determine whether a respiratory protective device needs to be repaired or replaced due to tear and wear from operations based on the performance parameter data objects and/or the performance indication data objects. In addition, safety requirements can be set up to provide baseline thresholds of the performance parameter data objects and/or the performance indication data objects. Because on the performance parameter data objects and/or the performance indication data objects, workers can determine whether the respiratory protective devices satisfy the safety requirements. As such, various embodiments of the present disclosure overcome many technical challenges and difficulties associated with respiratory protective devices, details of which are described herein.

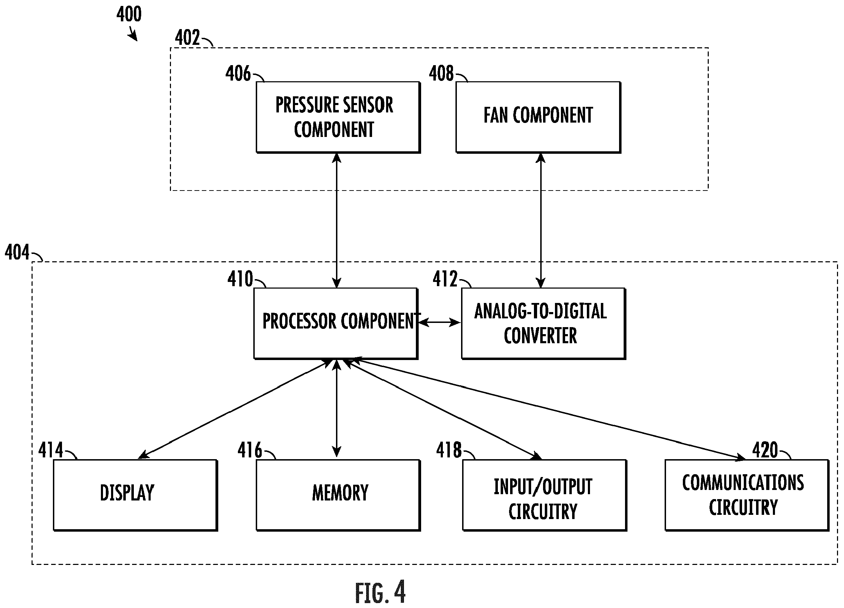

Referring now to FIG. 4, an example block diagram of an example respiratory protective device evaluation environment 400 in accordance with some embodiments of the present disclosure is illustrated.

In some embodiments, the example respiratory protective device evaluation environment 400 comprises an example respiratory protective device 402 and an example respiratory protective device evaluation system 404.

In some embodiments, the example respiratory protective device 402 is similar to the example respiratory protective devices described and illustrated above in connection with FIG. 1 to FIG. 3. For example, the example respiratory protective device 402 may comprise components that include, but not limited to, a mask component similar to those described above in connection with FIG. 1 to FIG. 3 (such as, but not limited to, at least the mask component 101 illustrated above in connection with FIG. 1, and the mask component 200 illustrated above in connection with FIG. 2A to FIG. 2D). In some embodiments, the example respiratory protective device 402 may comprise various electronic components, such as, but not limited to, those example electronic components described and illustrated above in connection with FIG. 3. For the simplicity of illustration, FIG. 4 illustrates two of the electronic components of the example respiratory protective device 402: a pressure sensor component 406 and a fan component 408.

In some embodiments, the pressure sensor component 406 is similar to the pressure sensor components 228A, 228B, and/or 228C described above in connection with FIG. 2A to FIG. 2C, and/or the pressure sensor component 303 described above in connection with FIG. 3. For example, the pressure sensor component 406 comprises a pressure sensor that detects the air pressure within the enclosed space between the mask component of the example respiratory protective device 402 and the user's face when the example respiratory protective device 402 is worn by the user. Examples of the pressure sensor component 406 include, but are not limited to, barometric pressure sensors, resistive air pressure transducer or strain gauge, capacitive air pressure transducer, airflow velocity sensors, inductive air pressure transducer, spirometers, pneumotachometers, and/or the like. For example, the pressure sensor component 406 generates pressure detection signals, which indicates pressure values within the enclosed space as described above.

In some embodiments, the fan component 408 is similar to the fan components 214A and/or 214B described above in connection with FIG. 2A to FIG. 2C, and/or the fan components 311A and/or 311B described above in connection with FIG. 3. For example, the fan component 408 may comprise an electric fan that blows air into the respiratory protective device 402 when a user wearing the respiratory protective device inhales. In some embodiments, the fan component 408 is connected to a power source (such as, but not limited to, a rechargeable battery) that provides a current and/or a voltage to trigger the operation of the fan component 408. For example, when the current or the voltage is provided to the fan component 408, the fan component 408 starts to operate and blows air into the respiratory protective device. When the current or the voltage is not provided to the fan component 408, the fan component 408 stops operation and stops blowing air into the respiratory protective device.

In the example respiratory protective device evaluation environment 400, the example respiratory protective device 402 may be worn by a testing mannequin. For example, the testing mannequin may comprise an artificial head model that is shaped based on contours and features of a typical human head, and the example respiratory protective device 402 may be secured to the artificial head model of the testing mannequin. In some embodiments, the example respiratory protective device 402 covers at least the mouth and/or the nose of the artificial head model. In some embodiments, the mouth and/or the nose of the artificial head model is connected to an artificial lung that mimics breathing patterns of human beings. For example, the artificial lung is connected to a motor that mimics inhaling and exhaling of human beings.

In some embodiments, the testing mannequin may simulate breathing patterns according to typical breathing patterns when a user is at rest. For example, the testing mannequin may test the example respiratory protective device 402 with a respiratory rate at 20 times per minute. In some embodiments, the testing mannequin may be placed at a testing environment with an environment temperature of 37 °C degrees and a humidity level of 90%. In such a testing environment, the fan component may operate to blow a maximum of 40 liters per minute (LPM) of air into the respiratory protective device 402.

In some embodiments, the testing mannequin may simulate breathing patterns according to typical breathing patterns when a user is exercising. For example, the testing mannequin may test the example respiratory protective device 402 with a respiratory rate at 40 times per minute. In some embodiments, the testing mannequin may be placed at a testing environment with an environment temperature of 37 °C degrees and a humidity level of 90%. In such testing environment, the fan component may operate to blow a maximum of 80 liters per minute (LPM) of air into the respiratory protective device 402.

In some embodiments, the example respiratory protective device 402 is connected to the respiratory protective device evaluation system 404 through wired and/or wireless means for data reading, writing, and transfer. In the example shown in FIG. 4, the respiratory protective device evaluation system 404 comprises a processor component 410, an analog-to-digital converter 412, a display 414, a memory 416, an input/output circuitry 418, and a communications circuitry 420.

In the example shown in FIG. 4, the processor component 410 is connected to the pressure sensor component 406 of the respiratory protective device 402. As described above, the pressure sensor component 406 comprises a pressure sensor that detects the air pressure within the enclosed space between the mask component of the example respiratory protective device 402 and the user's face when the example respiratory protective device 402 is worn by the user. In some embodiments, the pressure sensor component 406 generates pressure detection signals that indicate pressures within the enclosed space described above. In some embodiments, the pressure sensor component 406 is connected to the processor component 410 through wired and/or wireless means and provides pressure detection signals to the processor component 410. In some embodiments, the processor component 410 generates pressure measurement parameters based on the pressure detection signals received from the processor component 410.

In some embodiments, the analog-to-digital converter 412 is connected to the fan component 408 of the respiratory protective device 402. As described above, when a current and/or a voltage is provided to the fan component 408, the fan component 408 starts to operate and blows air into the respiratory protective device 402. In some embodiments, the analog-to-digital converter 412 receives an electrical signal that corresponds to the current and/or the voltage that is provided to the fan component 408. For example, the higher the electrical signal that is received by the analog-to-digital converter 412, the higher the current and/or voltage that is provided to the fan component 408, and the faster the fan component 408 operates.

In some embodiments, the analog-to-digital converter 412 converts the electrical signal received from the fan component 408 to a digital signal. For example, the analog-to-digital converter 412 converts the electrical signal into a digital signal that indicates the value of the current and/or the voltage that is provided to the fan component 408. Examples of the analog-to-digital converter 412 include, but are not limited to, direct-conversion analog-to-digital converter (ADC), successive-approximation ADCs, ramp-compare ADCs, and/or the like.

In some embodiments, the analog-to-digital converter 412 is connected to the processor component 410 of the respiratory protective device evaluation system 404 through wired and/or wireless means and provides digital signals to the processor component 410 of the respiratory protective device evaluation system 404. In some embodiments, based on the digital signals received from the analog-to-digital converter 412, the processor component 410 of the respiratory protective device evaluation system 404 generates fan control parameters that indicate the current and/or the voltage that is provided to the fan component 408.

The respiratory protective device evaluation system 404 may be configured to execute the operations described herein. Although components of the respiratory protective device evaluation system 404 are described with respect to functional limitations, it should be understood that the particular implementations necessarily include the use of particular hardware. It should also be understood that certain of the components described herein may include similar or common hardware. For example, two sets of circuitries may both leverage use of the same processor, network interface, storage medium, or the like to perform their associated functions, such that duplicate hardware is not required for each set of circuitries. The use of the term "circuitry" as used herein with respect to components of the apparatus should therefore be understood to include particular hardware configured to perform the functions associated with the particular circuitry as described herein.

As described above, the term "circuitry" should be understood broadly to include hardware and, in some embodiments, software for configuring the hardware. For example, in some embodiments, "circuitry" may include processing circuitry, storage media, network interfaces, input/output devices, and the like. In some embodiments, other elements of the respiratory protective device evaluation system 404 may provide or supplement the functionality of particular circuitry. For example, the processor component 410 may provide processing functionality, the memory 416 may provide storage functionality, the communications circuitry 420 may provide network interface functionality, and the like.

In some embodiments, the processor component 410 (and/or co-processor or any other processing circuitry assisting or otherwise associated with the processor) may be in communication with the memory 416 via a bus for passing information among components of the apparatus. The memory 416 may be non-transitory and may include, for example, one or more volatile and/or non-volatile memories. In other words, for example, the memory 416 may be an electronic storage device (e.g., a computer readable storage medium). The memory 416 may be configured to store information, data, content, applications, instructions, or the like, for enabling the respiratory protective device evaluation system 404 to carry out various functions in accordance with example embodiments of the present disclosure.

The processor component 410 may be embodied in a number of different ways and may, for example, include one or more processing devices configured to perform independently. Additionally, or alternatively, the processor component 410 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

In an example embodiment, the processor component 410 may be configured to execute instructions stored in the memory 416 or otherwise accessible to the processor. Alternatively, or additionally, the processor component 410 may be configured to execute hard-coded functionality. As such, whether configured by hardware or software methods, or by a combination thereof, the processor may represent an entity (e.g., physically embodied in circuitry) capable of performing operations according to an embodiment of the present disclosure while configured accordingly. Alternatively, as another example, when the processor component 410 is embodied as an executor of software instructions, the instructions may specifically configure the processor to perform the algorithms and/or operations described herein when the instructions are executed.

In some embodiments, the respiratory protective device evaluation system 404 may include the input/output circuitry 418 that may, in turn, be in communication with the processor component 410 to provide output to the user and, in some embodiments, to receive an indication of a user input. The input/output circuitry 418 may comprise an interface, a mobile application, a kiosk, or the like. In some embodiments, the input/output circuitry 418 may also include a keyboard, a mouse, a joystick, a touch screen, touch areas, soft keys, a microphone, a speaker, or other input/output mechanisms. The processor and/or user interface circuitry comprising the processor may be configured to control one or more functions of one or more user interface elements through computer program instructions (e.g., software and/or firmware) stored on a memory accessible to the processor (e.g., the memory 416, and/or the like).

In some embodiments, the respiratory protective device evaluation system 404 may include the display 414 that may, in turn, be in communication with the processor component 410 to display renderings of user interfaces. In various examples of the present disclosure, the display 414 may include a liquid crystal display (LCD), a light-emitting diode (LED) display, a plasma (PDP) display, a quantum dot (QLED) display, and/or the like.

The communications circuitry 420 may be any means such as a device or circuitry embodied in either hardware or a combination of hardware and software that is configured to receive and/or transmit data from/to a network and/or any other device, circuitry, or module in communication with the respiratory protective device evaluation system 404. In this regard, the communications circuitry 420 may include, for example, a network interface for enabling communications with a wired or wireless communication network. For example, the communications circuitry 420 may include one or more network interface cards, antennae, buses, switches, routers, modems, and supporting hardware and/or software, or any other device suitable for enabling communications via a network. Additionally, or alternatively, the communication interface may include the circuitry for interacting with the antenna(s) to cause transmission of signals via the antenna(s) or to handle receipt of signals received via the antenna(s).

It is also noted that all or some of the information discussed herein can be based on data that is received, generated and/or maintained by one or more components of respiratory protective device evaluation system 404. In some embodiments, one or more external systems (such as a remote cloud computing and/or data storage system) may also be leveraged to provide at least some of the functionality discussed herein.

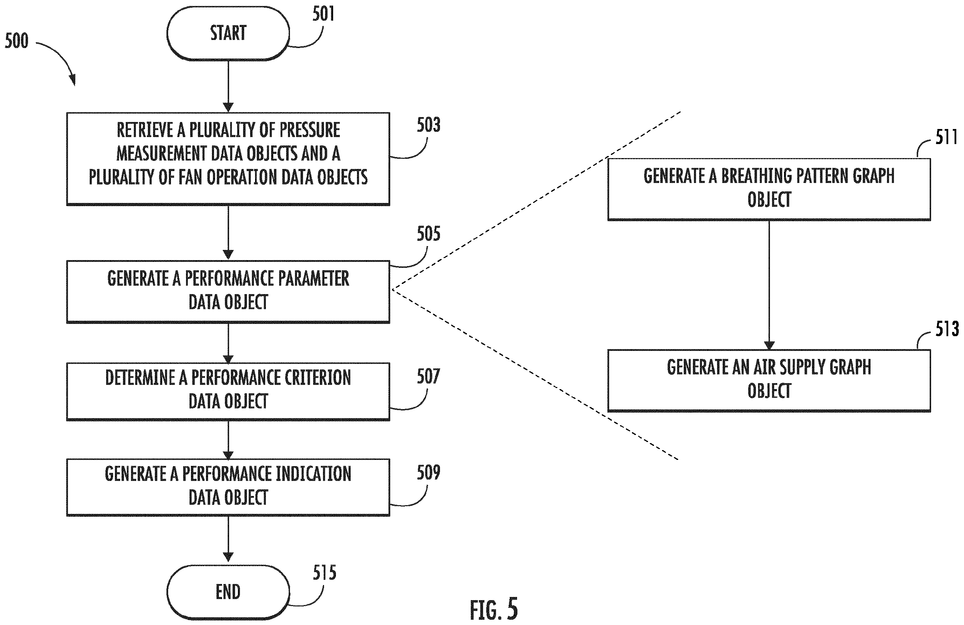

Referring now to FIG. 5 to FIG. 10, example diagrams illustrating example methods in accordance with various embodiments of the present disclosure are illustrated.

It is noted that each block of the flowchart, and combinations of blocks in the flowchart, may be implemented by various means such as hardware, firmware, circuitry and/or other devices associated with execution of software including one or more computer program instructions. For example, one or more of the steps/operations described in FIG. 5 to FIG. 10 may be embodied by computer program instructions, which may be stored by a non-transitory memory of an apparatus employing an embodiment of the present disclosure and executed by a processing circuitry in the apparatus. For example, these computer program instructions may direct the processor component 410 described above in connection with FIG. 4 to function in a particular manner, such that the instructions stored in the computer-readable storage memory produce an article of manufacture, the execution of which implements the function specified in the flowchart block(s).

As described above and as will be appreciated based on this disclosure, embodiments of the present disclosure may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

Referring now to FIG. 5, an example method 500 for evaluating a respiratory protective device in accordance with some example embodiments is illustrated. Similar to those described above in connection with at least FIG. 1 to FIG. 4, the example respiratory protective device comprises at least a fan component and at least a pressure sensor component.

In FIG. 5, the example method 500 starts at step/operation 501. In some embodiments, subsequent to and/or in response to step/operation 501, the example method 500 proceeds to step/operation 503. At step/operation 503, a processor (such as, but not limited to, the processor component 410 of the example respiratory protective device evaluation system 404 described in connection with FIG. 4 above) retrieves a plurality of pressure measurement data objects and a plurality of fan operation data objects.

In some embodiments, the plurality of pressure measurement data objects and the plurality of fan operation data objects are associated with a respiratory protective device. As described above in connection with at least FIG. 4, the respiratory protective device 402 may be worn by a testing mannequin that simulates human breathing, and the pressure measurement data objects and fan operation data objects retrieved by the processor component 410 are associated with the respiratory protective device 402.

In the present disclosure, the term "pressure measurement data object" refers to a data structure that represents data and/or information associated with the pressure detected in the enclosed space between the mask component of the example respiratory protective device and the face of the user (or the surface of the artificial head model) wearing the mask component. As described above, the example respiratory protective device comprises a pressure sensor component that detects the pressure in the enclosed space. In some embodiments, each of the plurality of pressure measurement data objects comprises a pressure measurement parameter associated with the pressure sensor component and a time code parameter correlating to the pressure measurement parameter.

For example, as the example respiratory protective device is worn by a user or a testing mannequin, the pressure sensor component generates pressure detection signals that indicate pressures within the enclosed space. The pressure sensor component transmits the pressure detection signals to the processor, and the processor generates pressure measurement parameters based on the pressure detection signals.

In some embodiments, the processor also generates time code parameters that record the time when each of the pressure detection signals is generated or received. In some embodiments, each of the time code parameters is correlated to a pressure measurement parameter. For example, when the pressure sensor component transmits a pressure detection signal to the processor, the processor generates a pressure measurement parameter that indicates the value of detected pressure based on the pressure detection signal and generates a time code parameter that indicates the time at which the pressure detection signal is generated or received. In some embodiments, the processor generates a pressure measurement data object that includes not only the pressure measurement parameter and the time code parameter, but also a data correlation between the pressure measurement parameter and the time code parameter.

In the present disclosure, the term "fan operation data object" refers to a data structure that represents data and/or information associated with the operation of the fan component of the respiratory protective device. As described above, the example respiratory protective device comprises a fan component that blows air into the example respiratory protective device. In some embodiments, each of the plurality of fan operation data objects comprises a fan control parameter associated with the fan component and a time code parameter correlating to the fan control parameter.

For example, as the example respiratory protective device is worn by a user or a testing mannequin, a current and/or a voltage is provided to the fan component so that the fan component can operate and blow air into the example respiratory protective device when the user or the testing mannequin inhales. In some embodiments, the fan component provides electrical signals to an analog-to-digital converter of the respiratory protective device evaluation system, and the electrical signals correspond to the currents and/or the voltages provided to the fan component. In some embodiments, the analog-to-digital converter converts electrical signals into digital signals, indicating values of current and/or voltage provided to the fan component. In some embodiments, the analog-to-digital converter transmits the digital signals to the processor, and the processor generates fan control parameters based on the digital signals. In some embodiments, each of the fan control parameters indicates at least one of a voltage value associated with the fan component or at least a current value associated with the fan component.

In some embodiments, the processor also generates time code parameters that record the time when each of the digital signals is generated or received. In some embodiments, each of the time code parameters is correlated to a fan control parameter. For example, when the analog-to-digital converter transmits a digital signal to the processor, the processor generates a fan control parameter that indicates the value of current or voltage that the fan component receives, and generates a time code parameter that indicates the time at which the digital signal is generated or received. In some embodiments, the processor generates a fan operation data object that includes not only the fan control parameter and the time code parameter, but also a data correlation between the fan control parameter and the time code parameter.

Referring back to FIG. 5, subsequent to and/or in response to step/operation 503, the example method 500 proceeds to step/operation 505. At step/operation 505, a processor (such as, but not limited to, the processor component 410 of the example respiratory protective device evaluation system 404 described in connection with FIG. 4 above) generates a performance parameter data object.

In the present disclosure, the term "performance parameter data object" refers to a data structure that represents data and/or information indicating one or more quantitative measurements of the performance of a respiratory protective device, including, but not limited to, the man-machine synchronization performance.

In some embodiments, the processor generates the performance parameter data object based at least in part on the plurality of pressure measurement data objects and the plurality of fan operation data objects associated with the respiratory protective device that are retrieved at step/operation 503. In some embodiments, the performance parameter data object comprises at least one of a trigger pressure parameter, a trigger percentage parameter, a latency time parameter, or an air supply parameter.

In some embodiments, the performance parameter data object comprises only one of the trigger pressure parameter, the trigger percentage parameter, the latency time parameter, or the air supply parameter. In some embodiments, the performance parameter data object comprises two of the trigger pressure parameter, the trigger percentage parameter, the latency time parameter, or the air supply parameter. In some embodiments, the performance parameter data object comprises three of the trigger pressure parameter, the trigger percentage parameter, the latency time parameter, or the air supply parameter. In some embodiments, the performance parameter data object comprises all of the trigger pressure parameter, the trigger percentage parameter, the latency time parameter, and the air supply parameter.

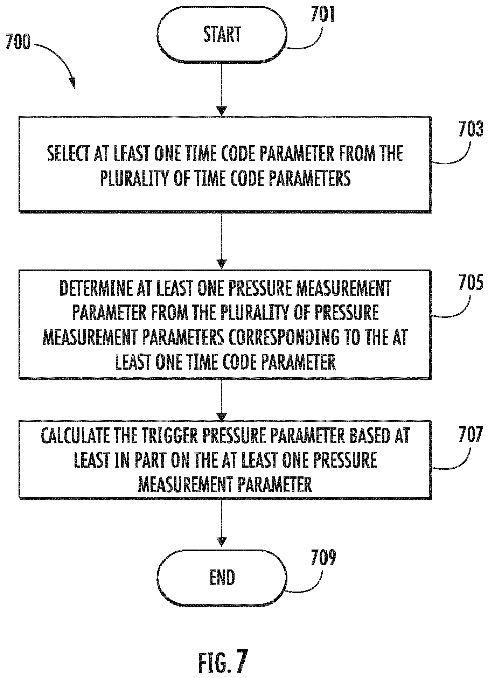

In the present disclosure, the term "trigger pressure parameter" refers to a parameter that indicates the pressure within the enclosed space described above for triggering the fan component to start to operate and/or blow air into the respiratory protective device. In some embodiments, the trigger pressure parameter reflects the response sensitivity of the respiratory protective device in controlling the fan component based on the breathing pattern of the user wearing the respiratory protective device. Additional details associated with calculating the trigger pressure parameter are described in connection with at least FIG. 7.

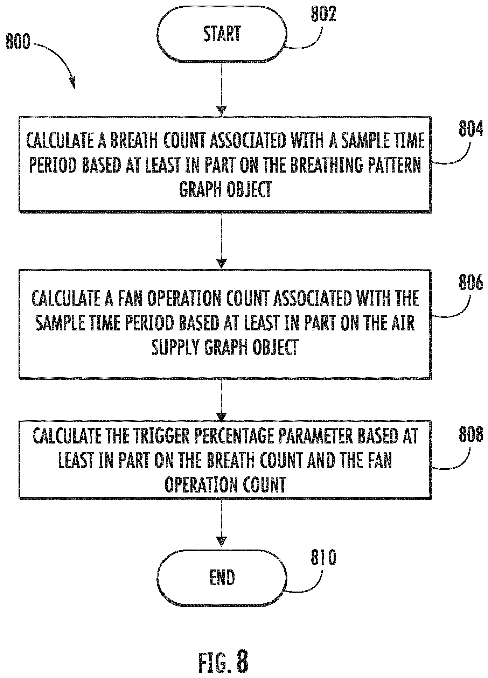

In the present disclosure, the term "trigger percentage parameter" refers to a parameter that indicates a ratio between a number of times that the fan component operates and a number of times that the user completes cycles of breathing (including an inhalation and an exhalation) during a sample time period. In some embodiments, the trigger percentage parameter reflects the response effectiveness of the respiratory protective device in controlling the fan component based on the breathing pattern of the user wearing the respiratory protective device. Additional details associated with calculating the trigger percentage parameter are described in connection with at least FIG. 8.

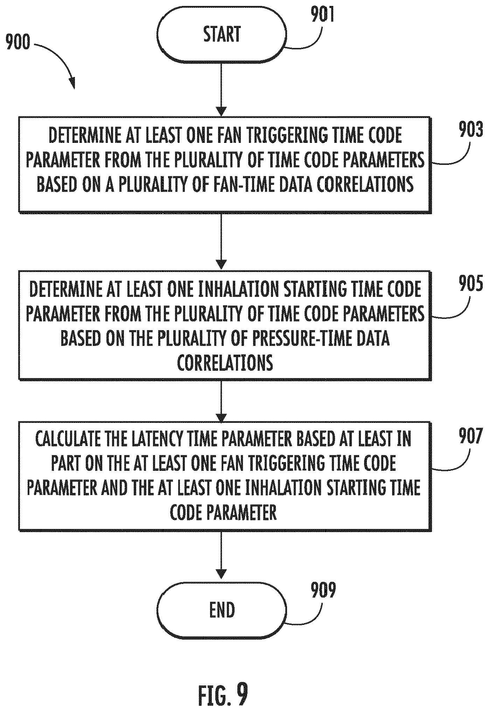

In the present disclosure, the term "latency time parameter" refers to a parameter that indicates a time delay between the time when the user inhales and the time when the fan component starts to operate. In some embodiments, the latency time parameter reflects the response speed of the respiratory protective device in controlling the fan component based on the breathing pattern of the user wearing the respiratory protective device. Additional details associated with calculating the latency time parameter are described in connection with at least FIG. 9.

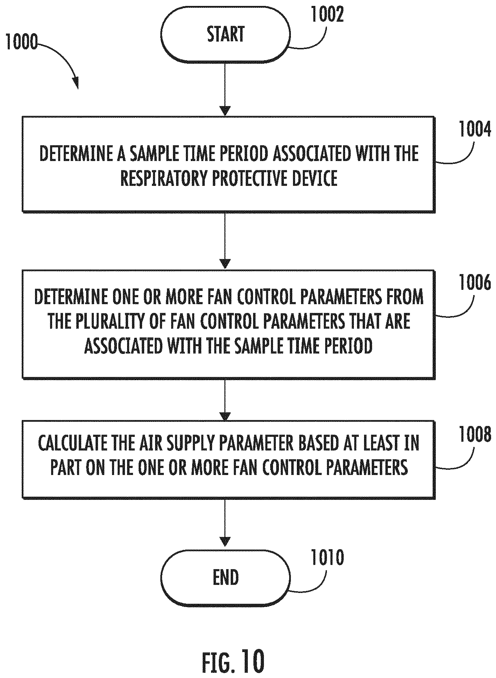

In the present disclosure, the term "air supply parameter" refers to a parameter that indicates a volume of air that the fan component blows into the example respiratory protective device when the user inhales. In some embodiments, the air supply parameter indicates the comfort level of user breathing when the user wears the example respiratory protective device. Additional details associated with calculating the air supply parameter are described in connection with at least FIG. 10.

Generating the performance parameter data object in accordance with various embodiments of the present disclosure can provide various technical benefits and advantages. As described above, one of the technical challenges and difficulties of using respiratory protective devices is the lack of scientific measurement parameters and approaches for evaluation. Various examples of the present disclosure overcome such technical challenges and difficulties by generating a performance parameter data object.

As illustrates above and described in detail herein, the performance parameter data object comprises the trigger pressure parameter, the trigger percentage parameter, the latency time parameter, and/or the air supply parameter, which provides quantitative measurements of the performance of a respiratory protective device, including, but not limited to, the man-machine synchronization performance. For example, the higher the value of the trigger pressure parameter, the higher the response sensitivity of the respiratory protective device in controlling the fan component based on the breathing pattern of the user wearing the respiratory protective device. The higher the value of the trigger percentage parameter, the higher the response effectiveness of the respiratory protective device in controlling the fan component based on the breathing pattern of the user wearing the respiratory protective device. The higher the value of the latency time parameter, the higher the response effectiveness of the respiratory protective device in controlling the fan component based on the breathing pattern of the user wearing the respiratory protective device. The higher the value of the air supply parameter, the higher the comfort level of user breathing when the user wears the example respiratory protective device.

As such, the performance parameter data object quantitatively indicates the air flow volume, breath pattern synchronization performance and user experience level in wearing the respiratory protective device. Based on the performance parameter data object, a user can determine when the respiratory protective devices need to be repaired or replaced. Additionally, or alternatively, safety requirements can be set up according to baseline thresholds of the performance indication data objects, which can in turn improve safety of wearing the respiratory protective device and provide various technical benefits.

In the example shown in FIG. 5, step/operation 505 may comprise one or more additional steps/operations.

For example, when generating the performance parameter data object at step/operation 505, the example method 500 further comprises step/operation 511. At step/operation 511, a processor (such as, but not limited to, the processor component 410 of the example respiratory protective device evaluation system 404 described in connection with FIG. 4 above) generates a breathing pattern graph object.

In the present disclosure, the term "graph object" refers to a data structure that represents data and/or information in a graphic form. For example, the term "breathing pattern graph object" refers to a graph object that represents data and/or information of breathing patterns of a user wearing an example respiratory protective device. In some embodiments, the processor generates the breathing pattern graph object based at least in part on the plurality of pressure measurement data objects retrieved at step/operation 503.

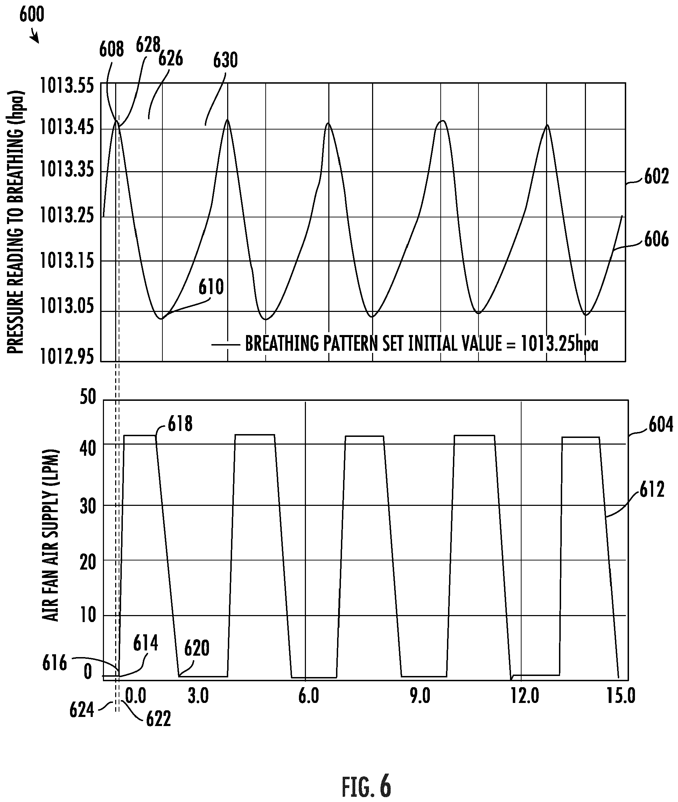

Referring now to FIG. 6, the example renderings 600 of example graph data objects in accordance with some embodiments of the present disclosure are illustrated. In particular, FIG. 6 illustrates an example rendering of an example breathing pattern graph object 602 in accordance with some embodiments of the present disclosure.

As described above, each of the plurality of pressure measurement data objects comprises a pressure measurement parameter associated with the pressure sensor component and a time code parameter correlating to the pressure measurement parameter. In the example shown in FIG. 6, the example rendering of an example breathing pattern graph object 602 comprises an X axis that corresponds to the time code parameter, and an Y axis that corresponds to the pressure measurement parameter. As such, the example rendering of an example breathing pattern graph object 602 illustrates a plurality of pressure-time data correlations between a plurality of pressure measurement parameters (based on the Y axis) and a plurality of time code parameters (based on the X axis).

As described above, each of the plurality of pressure measurement parameters indicates a detected pressure within the enclosed space between the respiratory protective device and a user's face. When the user inhales, the detected pressure decreases. When the user exhales, the detected pressure increases. As such, changes in the detected pressure reflect inhalation and exhalation of the user. Based on the plurality of pressure measurement parameters and their correlated time code parameters, the breathing pattern of the user can be determined.

As shown in FIG. 6, the example rendering of the example breathing pattern graph object 602 illustrates an example breathing pattern curve 606 that is based plotting a plurality of pressure measurement parameters (based on the Y axis) and their correlated time code parameters (based on the X axis) of a plurality of pressure measurement data objects. The example breathing pattern curve 606 illustrates an example user breathing pattern based on the pressure measurement data objects.

For example, as shown in FIG. 6, the initial pressure measurement parameter indicates a detected pressure of 1013.25 hPa at time code zero. Subsequently, the user exhales and the pressure measurement parameter increases to a maximum value at data point 608 of the example breathing pattern curve 606. At data point 608, the user completes exhalation and starts inhalation. Subsequently, as the user continues to inhale, the pressure measurement parameter decreases (as shown in area 626 of FIG. 6) and reaches a minimum value at data point 610 of the example breathing pattern curve 606. At data point 610, the user completes inhalation and starts exhalation, and the pressure measurement parameter subsequently increases (as shown in area 630 of FIG. 6).

As such, the example rendering of the example breathing pattern graph object 602 illustrates that pressure-time data correlations between pressure measurement parameters and time code parameters provide pressure-time series data for determining the breathing patterns of a user.

Referring back to FIG. 5, additionally, or alternatively, when generating the performance parameter data object at step/operation 505, the example method 500 further comprises step/operation 513. At step/operation 513, a processor (such as, but not limited to, the processor component 410 of the example respiratory protective device evaluation system 404 described in connection with FIG. 4 above) generates an air supply graph object.

In the present disclosure, the term "air supply graph object" refers to a graph object that represents data and/or information of the amount of air that is blown into a respiratory protective device by a fan component of the respiratory protective device. In some embodiments, the processor generates the air supply graph object based at least in part on the plurality of fan operation data objects retrieved at step/operation 503.

Referring now to FIG. 6, an example rendering of an example air supply graph object 604 in accordance with some embodiments of the present disclosure is illustrated.

As described above, each of the plurality of fan operation data objects comprises a fan control parameter associated with the fan component and a time code parameter correlating to the fan control parameter. In the example shown in FIG. 6, the example rendering of the example air supply graph object 604 comprises an X axis that corresponds to the time code parameter, and an Y axis that corresponds to the fan control parameter. As such, the example rendering of an example air supply graph object 604 illustrates a plurality of fan-time data correlations between a plurality of fan control parameters (based on the Y axis) and the plurality of time code parameters (based on the X axis).

As described above, each of the plurality of fan control parameters indicates at least one of a voltage value of a voltage that is provided to the fan component or at least a current value of a current that is provided to the fan component. In some embodiments, the higher the voltage value, the faster the fan component operates, and the more air is blown into the respiratory protective device. Additionally, or alternatively, the higher the current value, the faster the fan component operates, and the more air is blown into the respiratory protective device. As such, control signals (e.g. voltages and/or currents) of the fan component approximate the operation speeds of the fan component, which in turn approximate the air flow volume of the fan component. Based on the plurality of fan control parameters and their correlated time code parameters, the air supply volume of the fan component can be determined.

As shown in FIG. 6, the example rendering of the air supply graph object 604 illustrates an example air supply curve 612 that is based plotting a plurality of fan control parameters (based on the Y axis) and their correlated time code parameters (based on the X axis) of a plurality of fan operation data objects. The example air supply curve 612 provides an example of air supply volume of the fan component over time.

For example, as shown in FIG. 6, the initial fan control parameter indicates that the fan component is not operating at time code zero. As such, the air supply volume at time code zero is also zero. Subsequently, the fan component starts to operate at data point 616 of the example air supply curve 612, as indicated by the increase of the fan control parameter. In other words, the fan component starts an operation and blowing air into the respiratory protective device, and the air supply volume starts to increase. As shown in FIG. 6, the fan operation continues until data point 618 of the example air supply curve 612, where the fan component starts to slow down (as indicated by the decrease of the fan control parameter). Subsequently, the fan component comes to a complete stop at data point 620. In other words, the fan component stops operation and stops blowing air into the respiratory protective device.

As such, the example rendering of the example air supply graph object 604 illustrates that fan-time data correlations between fan control parameters and time code parameters provide current/voltage-time series data for determining the air flow volume from the fan component.

As shown in the example FIG. 6, the processor may correlate the breathing pattern graph object 602 and the air supply graph object 604 based on the time code parameters. For example, the rendering of the breathing pattern graph object 602 and the rendering of the air supply graph object 604 are aligned based on the time code parameters (e.g. the X axis shown in FIG. 6). In some embodiments, the trigger pressure parameter, the trigger percentage parameter, and the latency time parameter can be calculated based on the correlations between the breathing pattern graph object 602 and the air supply graph object 604, details of which are described herein.

Referring back to FIG. 5, subsequent to and/or in response to step/operation 505, the example method 500 proceeds to step/operation 507. At step/operation 507, a processor (such as, but not limited to, the processor component 410 of the example respiratory protective device evaluation system 404 described in connection with FIG. 4 above) determines a performance criterion data object.

In some embodiments, the processor determines the performance criterion data object corresponding to the performance parameter data object that is generated at step/operation 505. As described above, the performance parameter data object comprises at least one of a trigger pressure parameter, a trigger percentage parameter, a latency time parameter, and/or an air supply parameter. In some embodiments, the performance criterion data object comprises at least one of a trigger pressure threshold criterion, a trigger percentage threshold criterion, a latency time threshold criterion, and/or an air supply threshold criterion.

For example, in some embodiments, the performance parameter data object generated at step/operation 505 comprises the trigger pressure parameter. In such examples, the performance criterion data object determined at step/operation 507 comprises a trigger pressure threshold criterion, which indicates a threshold value for the trigger pressure parameter. In some embodiments, the trigger pressure threshold criterion may be determined based on user input and/or system requirement.

Additionally, or alternatively, the performance parameter data object generated at step/operation 505 comprises the trigger percentage parameter. In such examples, the performance criterion data object determined at step/operation 507 comprises a trigger percentage threshold criterion, which indicates a threshold value for the trigger percentage parameter. In some embodiments, the trigger percentage threshold criterion may be determined based on user input and/or system requirement.

Additionally, or alternatively, the performance parameter data object generated at step/operation 505 comprises the latency time parameter. In such examples, the performance criterion data object determined at step/operation 507 comprises a latency time threshold criterion, which indicates a threshold value for the latency time parameter. In some embodiments, the latency time threshold criterion may be determined based on user input and/or system requirement.

Additionally, or alternatively, the performance parameter data object generated at step/operation 505 comprises the air supply parameter. In such examples, the performance criterion data object determined at step/operation 507 comprises an air supply threshold criterion, which indicates a threshold value for the air supply parameter. In some embodiments, the air supply threshold criterion may be determined based on user input and/or system requirement.

Referring back to FIG. 5, subsequent to and/or in response to step/operation 507, the example method 500 proceeds to step/operation 509. At step/operation 509, a processor (such as, but not limited to, the processor component 410 of the example respiratory protective device evaluation system 404 described in connection with FIG. 4 above) generates a performance indication data object.

In the present disclosure, the term "performance indication data object" refers to a data structure that represents data and/or information of a qualitative determination of the performance of a respiratory protective device, including, but not limited to, the man-machine synchronization performance. In some embodiments, the performance indication data object may indicate a GOOD performance or a BAD performance of the respiratory protective device. In some embodiments, the processor generates a performance indication data object based on comparing the performance parameter data object generated at step/operation 505 with the performance criterion data object determined at step/operation 507.

For example, in some embodiments, the performance parameter data object generated at step/operation 505 comprises the trigger pressure parameter, and the performance criterion data object determined at step/operation 507 comprises the trigger pressure threshold criterion. In such an example, the processor compares the trigger pressure parameter with the trigger pressure threshold criterion, and determine whether the trigger pressure parameter satisfies the trigger pressure threshold criterion (e.g., whether the value of the trigger pressure parameter is larger than the threshold value indicated by the trigger pressure threshold criterion). If the trigger pressure parameter satisfies the trigger pressure threshold criterion, the processor generates a performance indication data object indicating that the respiratory protective device satisfies the performance criterion ("GOOD"). If the trigger pressure parameter does not satisfy the trigger pressure threshold criterion, the processor generates a performance indication data object indicating that the respiratory protective device does not satisfy the performance criterion ("BAD").

Additionally, or alternatively, the performance parameter data object generated at step/operation 505 comprises the trigger percentage parameter, and the performance criterion data object determined at step/operation 507 comprises the trigger percentage threshold criterion. In such an example, the processor compares the trigger percentage parameter with the trigger percentage threshold criterion, and determine whether the trigger percentage parameter satisfies the trigger percentage threshold criterion (e.g., whether the value of the trigger percentage parameter is larger than the threshold value indicated by the trigger percentage threshold criterion). If the trigger percentage parameter satisfies the trigger percentage threshold criterion, the processor generates a performance indication data object indicating that the respiratory protective device satisfies the performance criterion ("GOOD"). If the trigger percentage parameter does not satisfy the trigger percentage threshold criterion, the processor generates a performance indication data object indicating that the respiratory protective device does not satisfy the performance criterion ("BAD").

Additionally, or alternatively, the performance parameter data object generated at step/operation 505 comprises the latency time parameter, and the performance criterion data object determined at step/operation 507 comprises the latency time threshold criterion. In such an example, the processor compares the latency time parameter with the latency time threshold criterion, and determine whether the latency time parameter satisfies the latency time threshold criterion (e.g., whether the value of the latency time parameter is larger than the threshold value indicated by the latency time threshold criterion). If the latency time parameter satisfies the latency time threshold criterion, the processor generates a performance indication data object indicating that the respiratory protective device satisfies the performance criterion ("GOOD"). If the latency time parameter does not satisfy the latency time threshold criterion, the processor generates a performance indication data object indicating that the respiratory protective device does not satisfy the performance criterion ("BAD").

Additionally, or alternatively, the performance parameter data object generated at step/operation 505 comprises the air supply parameter, and the performance criterion data object determined at step/operation 507 comprises the air supply threshold criterion. In such an example, the processor compares the air supply parameter with the air supply threshold criterion, and determine whether the air supply parameter satisfies the air supply threshold criterion (e.g., whether the value of the air supply parameter is larger than the threshold value indicated by the air supply threshold criterion). If the air supply parameter satisfies the air supply threshold criterion, the processor generates a performance indication data object indicating that the respiratory protective device satisfies the performance criterion ("GOOD"). If the air supply parameter does not satisfy the air supply threshold criterion, the processor generates a performance indication data object indicating that the respiratory protective device does not satisfy the performance criterion ("BAD").

While the description above provides an example of generating a performance indication data object, it is noted that the scope of the present disclosure is not limited to the description above. For example, to generate the performance indication data object, the processor may retrieve one or more weight values that correspond to the one or more parameters of the performance indication data object, and may calculate a performance score based on the one or more weight values and the one or more parameters of the performance indication data object.

As an example, the performance indication data object may comprise a trigger pressure parameter, a trigger percentage parameter, a latency time parameter, and an air supply parameter. In such an example, the processor may retrieve a weight value corresponding to the trigger percentage parameter, a weight value corresponding to the latency time parameter, a weight value corresponding to the latency time parameter, and a weight value corresponding to the air supply parameter. The processor may calculate a performance score based on adding the multiplications of these parameters and their corresponding weight values.

Continuing from this example, the processor may determine a performance criterion data object that indicates a threshold value for the performance score, and compare the performance score with the threshold value. If the performance score satisfies the performance criterion data object, the processor generates a performance indication data object indicating that the respiratory protective device satisfies the performance criterion ("GOOD"). If the performance score does not satisfy the performance criterion data object, the processor generates a performance indication data object indicating that the respiratory protective device does not satisfy the performance criterion ("BAD").

Referring back to FIG. 5, subsequent to and/or in response to step/operation 509, the example method 500 proceeds to step/operation 515 and ends.

As described above, the performance parameter data object comprises at least one of a trigger pressure parameter, a trigger percentage parameter, a latency time parameter, or an air supply parameter. In some embodiments, the performance parameter data object comprises the trigger pressure parameter. Referring now to FIG. 7, an example method 700 of calculating the trigger pressure parameter in accordance with some example embodiments described herein is illustrated.

In FIG. 7, the example method 700 starts at step/operation 701. In some embodiments, subsequent to and/or in response to step/operation 701, the example method 700 proceeds to step/operation 703. At step/operation 703, a processor (such as, but not limited to, the processor component 410 of the example respiratory protective device evaluation system 404 described in connection with FIG. 4 above) selects at least one time code parameter from the plurality of time code parameters.

In some embodiments, the at least one time code parameter selected by the processor indicates at least one fan triggering time point associated with the fan component. At the fan triggering time point, the fan component receives a current and/or a voltage and starts an operation to blow air into the respiratory protective device.

In some embodiments, the processor selects the at least one time code parameter based on the plurality of fan-time data correlations of an air supply graph object described herein. For example, as described above in connection with FIG. 6, the example air supply graph object 604 illustrates a plurality of fan-time data correlations between fan control parameters (based on the Y axis) and the time code parameters (based on the X axis). In some embodiments, the processor traverses the fan control parameters (the Y axis) to determine a data point where the fan control parameter starts to increase from zero (e.g. where the operation of the fan component is triggered). For example, the processor may select the data point 614 shown in FIG. 6. Based on the fan-time data correlations, the processor selects a time code parameter that corresponds to the data point where the fan control parameter starts to increase from zero. For example, the processor selects the time code parameter 622 that corresponds to the data point 614 shown in FIG. 6. In this example, the selected time code parameter 622 indicates a fan triggering time point associated with the fan component (e.g. the time when the fan component starts to operate and blows air into the respiratory protective device).

Referring back to FIG. 7, subsequent to and/or in response to step/operation 703, the example method 700 proceeds to step/operation 705. At step/operation 705, a processor (such as, but not limited to, the processor component 410 of the example respiratory protective device evaluation system 404 described in connection with FIG. 4 above) determines at least one pressure measurement parameter from the plurality of pressure measurement parameters corresponding to the at least one time code parameter.

As described above, the pressure measurement data objects indicate data correlations between the pressure measurement parameters and time code parameters. In some embodiments, the at least one pressure measurement parameter is determined based at least in part on the data correlations.

For example, referring to FIG. 6, the processor selects time code parameter 622 as described above. As described above, the example breathing pattern graph object 602 illustrates pressure-time data correlations between pressure measurement parameters (based on the Y axis) and time code parameters (based on the X axis). In some embodiments, the processor determines a pressure measurement parameter that corresponds to the selected time code parameter based on the pressure-time data correlations. In the example shown in FIG. 6, the processor determines the pressure measurement parameter 628 that corresponds to the time code parameter 622.

Referring back to FIG. 7, subsequent to and/or in response to step/operation 705, the example method 700 proceeds to step/operation 707. At step/operation 707, a processor (such as, but not limited to, the processor component 410 of the example respiratory protective device evaluation system 404 described in connection with FIG. 4 above) calculates the trigger pressure parameter based at least in part on the at least one pressure measurement parameter.

In some embodiments, the value of trigger pressure parameter is calculated based on subtracting a pressure benchmark value from the value of the pressure measurement parameter determined at step/operation 705. In some embodiments, the pressure benchmark value is calculated by averaging the pressure measurement parameters associated with detected pressures in one or more cycles of breathing. For example, the trigger pressure parameter may be calculated based on the following algorithm:

Trigger pressure parameter = air fan start pressure - benchmark pressure

In the above algorithm, the air fan start pressure corresponds to the at least one pressure measurement parameter determined at step/operation 705, and the benchmark pressure corresponds to an average of detected pressures during one or more cycles of breathing as described above.

In some embodiments, the processor may determine a plurality of pressure measurement parameters associated with a sample time period, where each of the pressure measurement parameters corresponds to a detected pressure when the fan component starts to blow air into the respiratory protective device. In such examples, the value of the trigger pressure parameter is calculated based on averaging the pressure measurement parameters, and then subtracting the pressure benchmark value from the average value.

Referring back to FIG. 7, subsequent to and/or in response to step/operation 707, the example method 700 proceeds to step/operation 709 and ends.

While the description above illustrates an example of generating an example breathing pattern graph object based on the detected pressure by the pressure sensor component, and generating a performance parameter data object that comprises a trigger pressure parameter, it is noted that the scope of the present disclosure is not limited to the example provided above. Additionally, or alternatively, the breathing pattern graph object may be generated based on other parameters and/or properties (such as, but not limited to, temperature, humidity, and/or the like), and/or other trigger parameters may be included in the performance parameter data object in addition to or in alternative of the trigger pressure parameter described above.

For example, an example breathing pattern graph object may be generated based on parameters and properties associated with exhaled breaths of a user wearing the respiratory protective device.

As an example, an oronasal moisture sensor (or humidity sensor) can be used to generate humidity measurement parameters, which can reflect fluctuations in humidity of the exhaled breath from a user wearing the respiratory protective device. Examples of moisture / humidity sensors include, but are not limited to, interferometry sensors, relative humidity sensors, absolute humidity (moisture) sensors, hygrometers, and/or the like. In such an example, the processor correlates the humidity measurement parameters with time code parameters to derive the respiratory rate, and generates the example breathing pattern graph object based on the humidity measurement parameters and the time code parameters. The performance parameter data object comprises at least one of a trigger percentage parameter, a latency time parameter, an air supply parameter, or a trigger humidity parameter. The trigger humidity parameter indicates the humidity level of the exhaled breath for triggering the fan component to start to operate. In some embodiments, the trigger humidity parameter can be calculated based on selecting one or more time code parameters indicating fan triggering time points associated with the fan component based on the fan-time data correlations of the air supply graph object, determining one or more humidity measurement parameters that correspond to the one or more time code parameters, and calculating the trigger humidity parameter based at least in part on the one or more humidity measurement parameters (for example, an average value of the one or more humidity measurement parameters), similar to those described in connection with FIG. 7.

Additionally, or alternatively, an oronasal temperature sensor can be used to generate temperature measurement parameters, which can reflect fluctuations in temperature of the exhaled breath from a user wearing the respiratory protective device. Examples of temperature sensors include, but are not limited to, thermistors, infrared thermography, thermocouple sensors, nasal prongs, face masks, and/or the like. In such an example, the processor correlates the temperature measurement parameters with time code parameters to derive the respiratory rate, and generates the example breathing pattern graph object based on the temperature measurement parameters and the time code parameters. The performance parameter data object comprises at least one of a trigger percentage parameter, a latency time parameter, an air supply parameter, or a trigger temperature parameter. The trigger temperature parameter indicates the temperature level of the exhaled breath for triggering the fan component to start to operate. In some embodiments, the trigger temperature parameter can be calculated based on selecting one or more time code parameters indicating fan triggering time points associated with the fan component based on the fan-time data correlations of the air supply graph object, determining one or more temperature measurement parameters that correspond to the one or more time code parameters, and calculating the trigger temperature parameter based at least in part on the one or more temperature measurement parameters (for example, an average value of the one or more temperature measurement parameters), similar to those described in connection with FIG. 7.

Additionally, or alternatively, an oronasal capnography sensor can be used to generate capnography measurement parameters, which can reflect fluctuations in carbon dioxide concentrations from the exhaled breath of a user wearing the respiratory protective device. Examples of capnography sensors include, but are not limited to, capnometers, mid-infrared LED detectors, and/or the like. In such an example, the processor correlates the capnography measurement parameters with time code parameters to derive the respiratory rate, and generates the example breathing pattern graph object based on the capnography measurement parameters and the time code parameters. The performance parameter data object comprises at least one of a trigger percentage parameter, a latency time parameter, an air supply parameter, or a trigger capnography parameter. The trigger capnography parameter indicates the carbon dioxide concentration level of the exhaled breath for triggering the fan component to start to operate. In some embodiments, the trigger capnography parameter can be calculated based on selecting one or more time code parameters indicating fan triggering time points associated with the fan component based on the fan-time data correlations of the air supply graph object, determining one or more capnography measurement parameters that correspond to the one or more time code parameters, and calculating the trigger capnography parameter based at least in part on the one or more capnography measurement parameters (for example, an average value of the one or more capnography measurement parameters), similar to those described in connection with FIG. 7.

Additionally, or alternatively, an oronasal oxygen sensor can be used to generate oxygen measurement parameters, which can reflect fluctuations in oxygen concentrations from the exhaled breath of a user wearing the respiratory protective device. Examples of oxygen sensors include, but are not limited to, differential paramagnetic sensors, fiber optic fluorescence-based oxygen sensors, gas analysis systems, and/or the like. In such an example, the processor correlates the oxygen measurement parameters with time code parameters to derive the respiratory rate, and generates the example breathing pattern graph object based on the oxygen measurement parameters and the time code parameters. The performance parameter data object comprises at least one of a trigger percentage parameter, a latency time parameter, an air supply parameter, or a trigger oxygen parameter. The trigger oxygen parameter indicates the oxygen level of the exhaled breath for triggering the fan component to start to operate. In some embodiments, the trigger oxygen parameter can be calculated based on selecting one or more time code parameters indicating fan triggering time points associated with the fan component based on the fan-time data correlations of the air supply graph object, determining one or more oxygen measurement parameters that correspond to the one or more time code parameters, and calculating the trigger oxygen parameter based at least in part on the one or more oxygen measurement parameters (for example, an average value of the one or more oxygen measurement parameters), similar to those described in connection with FIG. 7.

Additionally, or alternatively, an example breathing pattern graph object may be generated based on parameters and properties associated with the thoracic effort of a user wearing the respiratory protective device.

As an example, a sensor can be used to generate thoracic circumference measurement parameters, which can reflect fluctuations in thoracic circumference of a user wearing the respiratory protective device. Examples of thoracic circumference sensors include, but are not limited to, inductance plethysmography sensors, piezoelectric sensors, rubber dilation sensors, stretch sensors, chest straps, or belts, and/or the like. In such an example, the processor correlates the thoracic circumference measurement parameters with time code parameters to derive the respiratory rate, and generates the example breathing pattern graph object based on the thoracic circumference measurement parameters and the time code parameters. The performance parameter data object comprises at least one of a trigger percentage parameter, a latency time parameter, an air supply parameter, or a trigger thoracic circumference parameter. The trigger thoracic circumference parameter indicates the thoracic circumference level for triggering the fan component to start to operate. In some embodiments, the trigger thoracic circumference parameter can be calculated based on selecting one or more time code parameters indicating fan triggering time points associated with the fan component based on the fan-time data correlations of the air supply graph object, determining one or more thoracic circumference measurement parameters that correspond to the one or more time code parameters, and calculating the trigger thoracic circumference parameter based at least in part on the one or more thoracic circumference measurement parameters (for example, an average value of the one or more thoracic circumference measurement parameters), similar to those described in connection with FIG. 7.

Additionally, or alternatively, a sensor can be used to generate thoracic motion measurement parameters, which can reflect fluctuations in thoracic motion of a user wearing the respiratory protective device. Examples of thoracic motion sensors include, but are not limited to, accelerometers, gyroscopes, ballistocardiograph sensors, bio-radiolocation sensors, sensors based on noncontact microwave and wireless networks, ferroelectric sensors, mattress sensors, electromagnetic generator, sensors based on small movement motion amplification, and/or the like. In such an example, the processor correlates the thoracic motion measurement parameters with time code parameters to derive the respiratory rate, and generates the example breathing pattern graph object based on the thoracic motion measurement parameters and the time code parameters. The performance parameter data object comprises at least one of a trigger percentage parameter, a latency time parameter, an air supply parameter, or a trigger thoracic motion parameter. The trigger thoracic motion parameter indicates the thoracic motion level for triggering the fan component to start to operate. In some embodiments, the trigger thoracic motion parameter can be calculated based on selecting one or more time code parameters indicating fan triggering time points associated with the fan component based on the fan-time data correlations of the air supply graph object, determining one or more thoracic motion measurement parameters that correspond to the one or more time code parameters, and calculating the trigger thoracic motion parameter based at least in part on the one or more thoracic motion measurement parameters (for example, an average value of the one or more thoracic motion measurement parameters), similar to those described in connection with FIG. 7.

Additionally, or alternatively, bioimpedance electrode sensors can be used to generate lung volume measurement parameters, which can reflect fluctuations in lung volume of a user wearing the respiratory protective device. Examples of bioimpedance electrode sensors may be, for example but not limited to, attached to a user's skin through disposable skin adhesive, in the form of portable body-worn devices, wearable garments, and/or the like. In such an example, the processor correlates the lung volume measurement parameters with time code parameters to derive the respiratory rate, and generates the example breathing pattern graph object based on the lung volume measurement parameters and the time code parameters. The performance parameter data object comprises at least one of a trigger percentage parameter, a latency time parameter, an air supply parameter, or a trigger lung volume parameter. The trigger lung volume parameter indicates the lung volume level for triggering the fan component to start to operate. In some embodiments, the trigger lung volume parameter can be calculated based on selecting one or more time code parameters indicating fan triggering time points associated with the fan component based on the fan-time data correlations of the air supply graph object, determining one or more lung volume measurement parameters that correspond to the one or more time code parameters, and calculating the trigger lung volume parameter based at least in part on the one or more lung volume measurement parameters (for example, an average value of the one or more lung volume measurement parameters), similar to those described in connection with FIG. 7.

Additionally, or alternatively, an example breathing pattern graph object may be generated based on parameters and properties associated with respiratory sounds of a user wearing the respiratory protective device.

As an example, a sensor can be used to generate acoustic respiratory signal measurement parameters, which can reflect fluctuations in acoustic respiratory signal of a user wearing the respiratory protective device. The acoustic respiratory signals can be measured near the oronasal area of the user by, such as but not limited to, noncontact microphones or wearable headsets, near the thoracic area of the user (e.g. chest, back, or armpit) by collecting electronic auscultation of signals from modified digital stethoscopes, near the tracheal area of the user (e.g. throat or neck) by using sensor adhesives placed near the throat or neck, and/or the like. In such an example, the processor correlates the acoustic respiratory signal measurement parameters with time code parameters to derive the respiratory rate, and generates the example breathing pattern graph object based on the acoustic respiratory signal measurement parameters and the time code parameters. The performance parameter data object comprises at least one of a trigger percentage parameter, a latency time parameter, an air supply parameter, or a trigger acoustic respiratory signal parameter. The trigger acoustic respiratory signal parameter indicates the acoustic respiratory signal level for triggering the fan component to start to operate. In some embodiments, the trigger acoustic respiratory signal parameter can be calculated based on selecting one or more time code parameters indicating fan triggering time points associated with the fan component based on the fan-time data correlations of the air supply graph object, determining one or more acoustic respiratory signal measurement parameters that correspond to the one or more time code parameters, and calculating the trigger acoustic respiratory signal parameter based at least in part on the one or more acoustic respiratory signal measurement parameters (for example, an average value of the one or more acoustic respiratory signal measurement parameters), similar to those described in connection with FIG. 7.

Additionally, or alternatively, an example breathing pattern graph object may be generated based on parameters and properties associated with indirect effects on cardiovascular physiology/blood flow of a user wearing the respiratory protective device. Such example parameters and properties include, but not limited to, electrocardiogram (ECG), photoplethysmogram (PPG), transcutaneous carbon dioxide tension (PtcCO2), pulse arrival time (PAT), arterial blood pressure (ABP), and/or the like.

As an example, a sensor can be used to generate heart rate measurement parameters, which can reflect fluctuations in heart rate of a user wearing the respiratory protective device. Examples of heart rate sensors include, but are not limited to, portable electrocardiogram electrode systems, and/or the like. In such an example, the processor correlates the heart rate measurement parameters with time code parameters to derive the respiratory rate, and generates the example breathing pattern graph object based on the heart rate measurement parameters and the time code parameters. The performance parameter data object comprises at least one of a trigger percentage parameter, a latency time parameter, an air supply parameter, or a trigger heart rate parameter. The trigger heart rate parameter indicates the heart rate level for triggering the fan component to start to operate. In some embodiments, the trigger heart rate parameter can be calculated based on selecting one or more time code parameters indicating fan triggering time points associated with the fan component based on the fan-time data correlations of the air supply graph object, determining one or more heart rate measurement parameters that correspond to the one or more time code parameters, and calculating the trigger heart rate parameter based at least in part on the one or more heart rate measurement parameters (for example, an average value of the one or more heart rate measurement parameters), similar to those described in connection with FIG. 7.

Additionally, or alternatively, a sensor can be used to generate blood oxygen measurement parameters, which can reflect fluctuations in blood oxygen level of a user wearing the respiratory protective device. Examples of blood oxygen sensors include, but are not limited to, pulse oximeters (including finger clip sensors and wrist-worn monitors) and/or the like. In such an example, the processor correlates the blood oxygen measurement parameters with time code parameters to derive the respiratory rate, and generates the example breathing pattern graph object based on the blood oxygen measurement parameters and the time code parameters. The performance parameter data object comprises at least one of a trigger percentage parameter, a latency time parameter, an air supply parameter, or a trigger blood oxygen parameter. The trigger blood oxygen parameter indicates the blood oxygen level for triggering the fan component to start to operate. In some embodiments, the trigger blood oxygen parameter can be calculated based on selecting one or more time code parameters indicating fan triggering time points associated with the fan component based on the fan-time data correlations of the air supply graph object, determining one or more blood oxygen measurement parameters that correspond to the one or more time code parameters, and calculating the trigger blood oxygen parameter based at least in part on the one or more blood oxygen measurement parameters (for example, an average value of the one or more blood oxygen measurement parameters), similar to those described in connection with FIG. 7.

Additionally, or alternatively, a sensor can be used to generate $PtcCO_2$ measurement parameters, which can reflect fluctuations in $PtcCO_2$ with respiration. An example $PtcCO_2$ sensor may include a wet Ag/AgCl electrode that is heated above fevered temperatures. In such an example, the $CO_2$ can be measured potentiometrically by determining the pH of an electrolyte layer of the electrode. The processor correlates the $PtcCO_2$ measurement parameters with time code parameters to derive the respiratory rate, and generates the example breathing pattern graph object based on the $PtcCO_2$ measurement parameters and the time code parameters. The performance parameter data object comprises at least one of a trigger percentage parameter, a latency time parameter, an air supply parameter, or a trigger $PtcCO_2$ parameter. The trigger $PtcCO_2$ parameter indicates the $PtcCO_2$ level for triggering the fan component to start to operate. In some embodiments, the trigger $PtcCO_2$ parameter can be calculated based on selecting one or more time code parameters indicating fan triggering time points associated with the fan component based on the fan-time data correlations of the air supply graph object, determining one or more $PtcCO_2$ measurement parameters that correspond to the one or more time code parameters, and calculating the trigger $PtcCO_2$ parameter based at least in part on the one or more $PtcCO_2$ measurement parameters (for example, an average value of the one or more $PtcCO_2$ measurement parameters), similar to those described in connection with FIG. 7.

Additionally, or alternatively, a sensor that is capable of sensing finger pulsatile arterial volume changes can be used to generate PAT measurement parameters, which can reflect fluctuations in PAT of a user wearing the respiratory protective device. In such an example, a processor may utilize fusion algorithms to process PAT waveforms to identify respiratory events. The processor correlates the PAT measurement parameters with time code parameters to derive the respiratory rate, and generates the example breathing pattern graph object based on the PAT measurement parameters and the time code parameters. In such an example, the performance parameter data object comprises at least one of a trigger percentage parameter, a latency time parameter, an air supply parameter, or a trigger PAT parameter. The trigger PAT parameter indicates the PAT level for triggering the fan component to start to operate. In some embodiments, the trigger PAT parameter can be calculated based on selecting one or more time code parameters indicating fan triggering time points associated with the fan component based on the fan-time data correlations of the air supply graph object, determining one or more PAT measurement parameters that correspond to the one or more time code parameters, and calculating the trigger PAT parameter based at least in part on the one or more PAT measurement parameters (for example, an average value of the one or more PAT measurement parameters), similar to those described in connection with FIG. 7.

Additionally, or alternatively, a sensor can be used to generate ABP measurement parameters, which can reflect fluctuations in ABP of a user wearing the respiratory protective device. Examples of such sensors include, but not limited to, sphygmomanometers, complete health monitoring systems displaying vital signs (e.g., ABP, pulse, and temperature), and/or the like. The processor correlates the ABP measurement parameters with time code parameters to derive the respiratory rate, and generates the example breathing pattern graph object based on the ABP measurement parameters and the time code parameters. In such an example, the performance parameter data object comprises at least one of a trigger percentage parameter, a latency time parameter, an air supply parameter, or a trigger ABP parameter. The trigger ABP parameter indicates the ABP level for triggering the fan component to start to operate. In some embodiments, the trigger ABP parameter can be calculated based on selecting one or more time code parameters indicating fan triggering time points associated with the fan component based on the fan-time data correlations of the air supply graph object, determining one or more ABP measurement parameters that correspond to the one or more time code parameters, and calculating the trigger ABP parameter based at least in part on the one or more ABP measurement parameters (for example, an average value of the one or more ABP measurement parameters), similar to those described in connection with FIG. 7.

As described above, the performance parameter data object comprises at least one of a trigger pressure parameter, a trigger percentage parameter, a latency time parameter, or an air supply parameter. In some embodiments, the performance parameter data object comprises the trigger percentage parameter. Referring now to FIG. 8, an example method 800 of calculating the trigger percentage parameter in accordance with some example embodiments described herein is illustrated.

In FIG. 8, the example method 800 starts at step/operation 802. In some embodiments, subsequent to and/or in response to step/operation 802, the example method 800 proceeds to step/operation 804. At step/operation 804, a processor (such as, but not limited to, the processor component 410 of the example respiratory protective device evaluation system 404 described in connection with FIG. 4 above) calculates a breath count associated with a sample time period based at least in part on the breathing pattern graph object.

In the present disclosure, the term "breath count" refers to a number of times that a user completes a cycle of breathing. For example, a single cycle of breathing comprises an inhalation and an exhalation. In some embodiments, the processor calculates the breath count based on the breathing pattern graph object.

As described above, the pressure measurement parameter decreases when the user inhales and increases when the user exhales. During a single cycle of breathing, the pressure measurement parameter both decreases to the minimum value and increases to the maximum value. As described above, the breathing pattern graph object illustrates pressure-time data correlations between pressure measurement parameters and time code parameters. As such, the processor determines the breath count associated with a sample time period based on determining time code parameters associated with time codes during the sample time period, determining pressure measurement parameters correlating to the time code parameters, and determining the number of times that the pressure measurement parameters reach the maximum value and the minimum value.

As an example in connection with FIG. 6, the sample time period is from 0.0 seconds to 15.0 seconds. Based on the example breathing pattern graph object 602, the processor determines that the pressure measurement parameters reach the maximum value five times and the minimum value five times during the sample time period. In such an example, the processor calculates the breath count associated with the sample time period to be five.

Referring back to FIG. 8, subsequent to and/or in response to step/operation 804, the example method 800 proceeds to step/operation 806. At step/operation 806, a processor (such as, but not limited to, the processor component 410 of the example respiratory protective device evaluation system 404 described in connection with FIG. 4 above) calculates a fan operation count associated with the sample time period based at least in part on the air supply graph object.

In the present disclosure, the term "fan operation count" refers to a number of times that the fan component of the respiratory protective device is triggered to operate. In other words, the fan operation count indicates the number of times that the fan component blows air into the respiratory protective device.

As described above, the fan control parameter indicates the value of the current or voltage that the fan component receives. When the fan component of the respiratory protective device is triggered to operate, the value of current or voltage increases, and the fan control parameter increases from zero and/or reaches the maximum value. As described above, the air supply graph object illustrates fan-time data correlations between fan control parameters and time code parameters. As such, the processor determines the fan operation count associated with a sample time period based on determining time code parameters indicate time codes during the sample time period, determining fan control parameters correlating the time code parameters, and determining the number of times that the fan control parameters increase from zero and/or reach the maximum value.

As an example in connection with FIG. 6, the sample time period is from 0.0 seconds to 15.0 second. Based on the example air supply graph object 604, the processor determines that the fan control parameter increases from zero five times (or reaches the maximum value five times) during the sample time period. In such an example, the processor calculates the fan operation count associated with the sample time period to be five.

Referring back to FIG. 8, subsequent to and/or in response to step/operation 806, the example method 800 proceeds to step/operation 808. At step/operation 808, a processor (such as, but not limited to, the processor component 410 of the example respiratory protective device evaluation system 404 described in connection with FIG. 4 above) calculates the trigger percentage parameter based at least in part on the breath count and the fan operation count.

For example, the processor calculates the trigger percentage parameter as a ratio between the fan operation count calculated at step/operation 806 and the breath count calculated at step/operation 804. In some embodiments, the processor divides the fan operation count calculated at step/operation 806 by the breath count calculated at step/operation 804. In some embodiments, the processor may calculate the trigger percentage parameter based on the following algorithm:

$$\text{trigger percentage parameter} = \text{number of fan operations} / \text{number of breath}$$

In the above algorithm, the number of fan operations corresponds to the fan operation count calculated at step/operation 806, and the number of breath corresponds to the breath count calculated at step/operation 804.

Continuing from the example described above in connection with FIG. 6, the processor calculates the trigger percentage parameter to be 100%.

Referring back to FIG. 8, subsequent to and/or in response to step/operation 808, the example method 800 proceeds to step/operation 810 and ends.

As described above, the performance parameter data object comprises at least one of a trigger pressure parameter, a trigger percentage parameter, a latency time parameter, or an air supply parameter. In some embodiments, the performance parameter data object comprises the latency time parameter. Referring now to FIG. 9, an example method 900 of calculating the latency time parameter in accordance with some example embodiments described herein is illustrated.

In FIG. 9, the example method 900 starts at step/operation 901. In some embodiments, subsequent to and/or in response to step/operation 901, the example method 900 proceeds to step/operation 903. At step/operation 903, a processor (such as, but not limited to, the processor component 410 of the example respiratory protective device evaluation system 404 described in connection with FIG. 4 above) determines at least one fan triggering time code parameter from the plurality of time code parameters based on a plurality of fan-time data correlations.

As described above, the processor generates an air supply graph object that indicates a plurality of fan-time data correlations between fan control parameters and time code parameters. In some embodiments, the processor determines the at least one fan triggering time code parameter similar to those described above in connection with at least step/operation 703 of FIG. 7.

For example, the at least one fan triggering time code parameter determined by the processor indicates at least one fan triggering time point associated with the fan component. At the fan triggering time point, the fan component receives a current and/or voltage and starts an operation to blow air into the respiratory protective device.

As described above in connection with FIG. 6, the example air supply graph object 604 illustrates a plurality of fan-time data correlations between fan control parameters (based on the Y axis) and the time code parameters (based on the X axis). In some embodiments, the processor traverses the fan control parameters (the Y axis) to determine a data point where the fan control parameter starts to increase from zero (e.g. where the operation of the fan component is triggered). For example, the processor may select the data point 614 shown in FIG. 6.

Based on the fan-time data correlations, the processor determines a time code parameter that corresponds to the data point where the fan control parameter starts to increase from zero as a fan triggering time code parameter. For example, the processor determines the time code parameter 622 that corresponds to the data point 614 shown in FIG. 6 as a fan triggering time code parameter. In this example, the selected time code parameter 622 indicates a fan triggering time point associated with the fan component (e.g. when the fan component starts to operate and blows air into the respiratory protective device).

Referring back to FIG. 9, subsequent to and/or in response to step/operation 903, the example method 900 proceeds to step/operation 905. At step/operation 905, a processor (such as, but not limited to, the processor component 410 of the example respiratory protective device evaluation system 404 described in connection with FIG. 4 above) determines at least one inhalation starting time code parameter from the plurality of time code parameters based on the plurality of pressure-time data correlations.

In some embodiments, the at least one inhalation starting time code parameter indicates at least one inhalation starting time point. At the inhalation starting time point, a user wearing the example respiratory protective device starts to inhale.

In some embodiments, the processor determines the inhalation starting time code parameters based on the plurality of pressure-time data correlations of a breathing pattern graph object described herein. For example, as described above in connection with FIG. 6, the example breathing pattern graph object 602 illustrates a plurality of pressure-time data correlations between pressure measurement parameters (based on the Y axis) and the time code parameters (based on the X axis). In some embodiments, the processor traverses the pressure measurement parameters (the Y axis) to determine a data point where the pressure measurement parameter starts to decrease. For example, the processor may select the data point 608 shown in FIG. 6.

Based on the pressure-time data correlations, the processor determines a time code parameter that corresponds to the data point where the pressure measurement parameter starts to decrease as the inhalation starting time code parameter. For example, the processor selects the time code parameter 624 that corresponds to the data point 608 shown in FIG. 6. In this example, the time code parameter 624 indicates an inhalation starting time point, and the processor determines the time code parameter 624 as an inhalation starting time code parameter.

Referring back to FIG. 9, subsequent to and/or in response to step/operation 905, the example method 900 proceeds to step/operation 907. At step/operation 907, a processor (such as, but not limited to, the processor component 410 of the example respiratory protective device evaluation system 404 described in connection with FIG. 4 above) calculates the latency time parameter based at least in part on the at least one fan triggering time code parameter and the at least one inhalation starting time code parameter.

In some embodiments, the processor calculates the latency time parameter based at least in part on the at least one fan triggering time code parameter determined at step/operation 903 and the at least one inhalation starting time code parameter determines at step/operation 905. In some embodiments, the latency time parameter corresponds to a time difference between the at least one fan triggering time code parameter and the at least one inhalation starting time code parameter. For example, the latency time parameter may be calculated based on the following algorithm:

$$\text{latency time parameter} = \text{time (air fan start)} - \text{time (exhale transfer to inhale)}$$

In the above algorithm, time (air fan start) corresponds to the fan triggering time code parameter determined at step/operation 903, and time (exhale transfer to inhale) corresponds to the inhalation starting time code parameter determined at step/operation 905.

Referring back to FIG. 9, subsequent to and/or in response to step/operation 907, the example method 900 proceeds to step/operation 909 and ends.

As described above, the performance parameter data object comprises at least one of a trigger pressure parameter, a trigger percentage parameter, a latency time parameter, or an air supply parameter. In some embodiments, the performance parameter data object comprises the air supply parameter. Referring now to FIG. 10, an example method 1000 of calculating the air supply parameter in accordance with some example embodiments described herein is illustrated.

In FIG. 10, the example method 1000 starts at step/operation 1002. In some embodiments, subsequent to and/or in response to step/operation 1002, the example method 1000 proceeds to step/operation 1004. At step/operation 1004, a processor (such as, but not limited to, the processor component 410 of the example respiratory protective device evaluation system 404 described in connection with FIG. 4 above) determines a sample time period associated with the respiratory protective device.

In some embodiments, the sample time period comprises a starting time code parameter and an ending time code parameter. In some embodiments, the sample time period is determined based on a user input and/or a system requirement. For example, the sample time period may be 15 seconds. Additionally, or alternatively, the sample time period may be less than or more than 15 seconds.

Referring back to FIG. 10, subsequent to and/or in response to step/operation 1004, the example method 1000 proceeds to step/operation 1006. At step/operation 1006, a processor (such as, but not limited to, the processor component 410 of the example respiratory protective device evaluation system 404 described in connection with FIG. 4 above) determines one or more fan control parameters from the plurality of fan control parameters that are associated with the sample time period.

As described above, the processor generates an air supply graph object that indicates a plurality of fan-time data correlations between fan control parameters and time code parameters. In some embodiments, the processor determines time code parameters between the starting time code parameter and the ending time code parameter of the sample time period, and determines fan control parameters that are associated with the time code parameters based on the fan-time data correlations.

For example, referring now to FIG. 6, the processor may determine the sample time period to be 15 seconds. In this example, the processor may determine the starting time code parameter of the sample time period as indicating 0.0 seconds, and the ending time code parameter as indicating 15.0 seconds. Based on the fan-time data correlations of the air supply graph object 604, the processor determines fan control parameters that correlate to time code parameters between 0.0 second and 15.0 seconds.

Referring back to FIG. 10, subsequent to and/or in response to step/operation 1006, the example method 1000 proceeds to step/operation 1008. At step/operation 1008, a processor (such as, but not limited to, the processor component 410 of the example respiratory protective device evaluation system 404 described in connection with FIG. 4 above) calculates the air supply parameter based at least in part on the one or more fan control parameters.

As described above, the fan control parameter indicates the value of current or voltage that the fan component receives. The higher the current and/or voltage, the faster the fan component operates, and the more air flows into the respiratory protective device. As such, the air flow volume of the fan component can be calculated based on the values of the fan control parameters.

For example, the processor may calculate a fan speed based on a fan control parameter. In some embodiments, the processor may calculate the fan speed based on the follow algorithm:

$$\text{fan speed} = \text{fan control parameter} \times \text{CC1}$$

In the above algorithm, CC1 is the correlation coefficient between the fan speed and the fan control parameter. In some embodiments, the value of CC1 may be predetermined. The processor may then calculate the air flow volume based on the fan speed. In some embodiments, the processor may calculate the air flow volume based on the following algorithm:

$$\text{air flow volume} = \text{fan speed} \times \text{CC2}$$

In the above algorithm, CC2 is the correlation coefficient between the air flow volume and the fan speed. In some embodiments, the value of CC2 may be predetermined.

As described above, each fan control parameter correlates to a time code parameter. In some embodiments, the processor may calculate an air flow volume for each of the fan control parameters determined at step/operation 1006, and may calculate the air supply parameter based on an integral of the air flow volumes that are calculated based on the fan control parameters determined at step/operation 1006.

Additionally, or alternatively, the processor may calculate an integral of fan control parameters that are determined at step/operation 1006, and then calculate the air supply parameter based on multiplying the integral of fan control parameters with the correlation coefficients CC1 and CC2 described above.

Continuing from the example above in connection with FIG. 6, the processor may calculate an air flow volume for each of the fan control parameter that is associated with a time code parameter between the starting time code parameter of 0.0 second and the ending time code parameter of 15.0 seconds. In some embodiments, the processor may calculate the air supply parameter based on calculating an integral of these air flow volumes or adding these air flow volumes together.

Referring back to FIG. 10, subsequent to and/or in response to step/operation 1008, the example method 1000 proceeds to step/operation 1010 and ends.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

**Claims**

1. An apparatus for evaluating a respiratory protective device, the respiratory protective device comprising a fan component and a pressure sensor component, the apparatus comprising at least one processor and at least one non-transitory memory comprising program code, the at least one non-transitory memory and the program code configured to, with the at least one processor, cause the apparatus to at least:

   retrieve a plurality of pressure measurement data objects and a plurality of fan operation data objects associated with the respiratory protective device;
   generate a performance parameter data object based on the plurality of pressure measurement data objects and the plurality of fan operation data objects, wherein the performance parameter data object comprises at least one of a trigger pressure parameter, a trigger percentage parameter, a latency time parameter, or an air supply parameter;
   determine a performance criterion data object corresponding to the performance parameter data object; and

generate a performance indication data object based on comparing the performance parameter data object with the performance criterion data object.

2. The apparatus of claim 1, wherein each of the plurality of pressure measurement data objects comprises a pressure measurement parameter associated with the pressure sensor component and a time code parameter correlating to the pressure measurement parameter.

3. The apparatus of claim 1, wherein each of the plurality of fan operation data objects comprises a fan control parameter associated with the fan component and a time code parameter correlating to the fan control parameter.

4. The apparatus of claim 3, wherein the fan control parameter indicates at least one of a voltage value associated with the fan component or at least a current value associated with the fan component.

5. The apparatus of claim 1, wherein, when generating the performance parameter data object, the at least one non-transitory memory and the program code are configured to, with the at least one processor, cause the apparatus to:

generate, based on the plurality of pressure measurement data objects, a breathing pattern graph object indicating a plurality of pressure-time data correlations between a plurality of pressure measurement parameters and a plurality of time code parameters; and

generate, based on the plurality of fan operation data objects, an air supply graph object indicating a plurality of fan-time data correlations between a plurality of fan control parameters and the plurality of time code parameters.

6. The apparatus of claim 5, wherein the performance parameter data object comprises the trigger pressure parameter, wherein the at least one non-transitory memory and the program code are configured to, with the at least one processor, cause the apparatus to:

select at least one time code parameter from the plurality of time code parameters based on the plurality of fan-time data correlations, wherein the at least one time code parameter indicating at least one fan triggering time point associated with the fan component;

determine at least one pressure measurement parameter from the plurality of pressure measurement parameters corresponding to the at least one time code parameter; and

calculate the trigger pressure parameter based at least in part on the at least one pressure measurement parameter.

7. The apparatus of claim 5, wherein the performance parameter data object comprises the trigger percentage parameter, wherein the at least one non-transitory memory and the program code are configured to, with the at least one processor, cause the apparatus to:

calculate a breath count associated with a sample time period based at least in part on the breathing pattern graph object;

calculate a fan operation count associated with the sample time period based at least in part on the air supply graph object; and

calculate the trigger percentage parameter based at least in part on the breath count and the fan operation count.

8. The apparatus of claim 5, wherein the performance parameter data object comprises the latency time parameter, wherein the at least one non-transitory memory and the program code are configured to, with the at least one processor, cause the apparatus to:

determine at least one fan triggering time code parameter from the plurality of time code parameters based on the plurality of fan-time data correlations;

determine at least one inhalation starting time code parameter from the plurality of time code parameters based on the plurality of pressure-time data correlations; and

calculate the latency time parameter based at least in part on the at least one fan triggering time code parameter and the at least one inhalation starting time code parameter.

9. The apparatus of claim 5, wherein the performance parameter data object comprises the air supply parameter, wherein the at least one non-transitory memory and the program code are configured to, with the at least one processor, cause the apparatus to:

determine a sample time period associated with the respiratory protective device;
determine one or more fan control parameters from the plurality of fan control parameters that are associated with the sample time period; and
calculate the air supply parameter based at least in part on the one or more fan control parameters.

10. A computer-implemented method for evaluating a respiratory protective device, the respiratory protective device comprising a fan component and a pressure sensor component, the computer-implemented method comprising:

retrieving a plurality of pressure measurement data objects and a plurality of fan operation data objects associated with the respiratory protective device;
generating a performance parameter data object based on the plurality of pressure measurement data objects and the plurality of fan operation data objects, wherein the performance parameter data object comprises at least one of a trigger pressure parameter, a trigger percentage parameter, a latency time parameter, or an air supply parameter;
determining a performance criterion data object corresponding to the performance parameter data object; and
generating a performance indication data object based on comparing the performance parameter data object with the performance criterion data object.

11. The computer-implemented method of claim 10, wherein each of the plurality of pressure measurement data objects comprises a pressure measurement parameter associated with the pressure sensor component and a time code parameter correlating to the pressure measurement parameter.

12. The computer-implemented method of claim 10, wherein each of the plurality of fan operation data objects comprises a fan control parameter associated with the fan component and a time code parameter correlating to the fan control parameter.

13. The computer-implemented method of claim 12, wherein the fan control parameter indicates at least one of a voltage value associated with the fan component or at least a current value associated with the fan component.

14. The computer-implemented method of claim 10, wherein generating the performance parameter data object further comprises:

generating, based on the plurality of pressure measurement data objects, a breathing pattern graph object indicating a plurality of pressure-time data correlations between a plurality of pressure measurement parameters and a plurality of time code parameters; and
generating, based on the plurality of fan operation data objects, an air supply graph object indicating a plurality of fan-time data correlations between a plurality of fan control parameters and the plurality of time code parameters.

15. The computer-implemented method of claim 14, wherein the performance parameter data object comprises the trigger pressure parameter, wherein the computer-implemented method further comprise:

selecting at least one time code parameter from the plurality of time code parameters based on the plurality of fan-time data correlations, wherein the at least one time code parameter indicating at least one fan triggering time point associated with the fan component;
determining at least one pressure measurement parameter from the plurality of pressure measurement parameters corresponding to the at least one time code parameter; and
calculating the trigger pressure parameter based at least in part on the at least one pressure measurement parameter.

FIG. 1

EP 4 292 671 A1

FIG. 2A

200

218

216

206

214A

209A 204A 202A

222A

226

236A
236C 236B

230

220A

FIG. 2B

FIG. 2C

FIG. 2D

FIG. 3

FIG. 4

FIG. 5

FIG. 6

701

700

START

703

SELECT AT LEAST ONE TIME CODE PARAMETER FROM THE PLURALITY OF TIME CODE PARAMETERS

705

DETERMINE AT LEAST ONE PRESSURE MEASUREMENT PARAMETER FROM THE PLURALITY OF PRESSURE MEASUREMENT PARAMETERS CORRESPONDING TO THE AT LEAST ONE TIME CODE PARAMETER

707

CALCULATE THE TRIGGER PRESSURE PARAMETER BASED AT LEAST IN PART ON THE AT LEAST ONE PRESSURE MEASUREMENT PARAMETER

709

END

FIG. 7

800

802

START

CALCULATE A BREATH COUNT ASSOCIATED WITH A SAMPLE TIME PERIOD BASED AT LEAST IN PART ON THE BREATHING PATTERN GRAPH OBJECT

804

CALCULATE A FAN OPERATION COUNT ASSOCIATED WITH THE SAMPLE TIME PERIOD BASED AT LEAST IN PART ON THE AIR SUPPLY GRAPH OBJECT

806

CALCULATE THE TRIGGER PERCENTAGE PARAMETER BASED AT LEAST IN PART ON THE BREATH COUNT AND THE FAN OPERATION COUNT

808

END

810

FIG. 8

901
900

START

DETERMINE AT LEAST ONE FAN TRIGGERING TIME CODE PARAMETER FROM THE PLURALITY OF TIME CODE PARAMETERS BASED ON A PLURALITY OF FAN-TIME DATA CORRELATIONS — 903

DETERMINE AT LEAST ONE INHALATION STARTING TIME CODE PARAMETER FROM THE PLURALITY OF TIME CODE PARAMETERS BASED ON THE PLURALITY OF PRESSURE-TIME DATA CORRELATIONS — 905

CALCULATE THE LATENCY TIME PARAMETER BASED AT LEAST IN PART ON THE AT LEAST ONE FAN TRIGGERING TIME CODE PARAMETER AND THE AT LEAST ONE INHALATION STARTING TIME CODE PARAMETER — 907

END — 909

FIG. 9

1000

1002
START

1004
DETERMINE A SAMPLE TIME PERIOD ASSOCIATED WITH THE RESPIRATORY PROTECTIVE DEVICE

1006
DETERMINE ONE OR MORE FAN CONTROL PARAMETERS FROM THE PLURALITY OF FAN CONTROL PARAMETERS THAT ARE ASSOCIATED WITH THE SAMPLE TIME PERIOD

1008
CALCULATE THE AIR SUPPLY PARAMETER BASED AT LEAST IN PART ON THE ONE OR MORE FAN CONTROL PARAMETERS

1010
END

FIG. 10

Europäisches
Patentamt

European
Patent Office

Office européen
des brevets

# EUROPEAN SEARCH REPORT

Application Number

EP 23 17 8887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 915 645 A1 (KONINKLIJKE PHILIPS NV [NL]) 1 December 2021 (2021-12-01)<br>* paragraphs [0019] – [0021] *<br>* paragraphs [0036] – [0038] *<br>* paragraphs [0067] – [0071] *<br>* paragraphs [0076] – [0081] *<br>* paragraph [0090] *<br>* paragraphs [0104] – [0115] *<br>* paragraphs [0123] – [0135] *<br>* paragraph [0144] *<br>* paragraphs [0151] – [0154] *<br>* paragraphs [0159] – [0162] *<br>* figures 1-10 * | 1-15 | INV.<br>A62B27/00<br>A62B18/00<br>A62B18/02<br>A62B18/08 |
| X | US 2018/078798 A1 (FABIAN JUDIT [SG] ET AL) 22 March 2018 (2018-03-22)<br>* paragraphs [0222] – [0223] *<br>* paragraphs [0230] – [0233] *<br>* paragraphs [0247] – [0248] *<br>* paragraphs [0271] – [0277] *<br>* figures 4-6, 9-11 * | 1-15 | |
| | | | TECHNICAL FIELDS SEARCHED (IPC)<br><br>A62B |

The present search report has been drawn up for all claims

| Place of search | Date of completion of the search | Examiner |
|---|---|---|
| The Hague | 9 October 2023 | Zupancic, Gregor |

EPO FORM 1503 03.82 (P04C01)

## ANNEX TO THE EUROPEAN SEARCH REPORT
## ON EUROPEAN PATENT APPLICATION NO.

EP 23 17 8887

09-10-2023

| Patent document cited in search report | Publication date | Patent family member(s) | | Publication date |
|---|---|---|---|---|
| EP 3915645 A1 | 01-12-2021 | NONE | | |
| US 2018078798 A1 | 22-03-2018 | CN | 107405508 A | 28-11-2017 |
| | | EP | 3277386 A1 | 07-02-2018 |
| | | HK | 1249069 A1 | 26-10-2018 |
| | | JP | 2018512518 A | 17-05-2018 |
| | | KR | 20170132188 A | 01-12-2017 |
| | | SG | 11201707644Q A | 30-10-2017 |
| | | TW | 201701915 A | 16-01-2017 |
| | | US | 2018078798 A1 | 22-03-2018 |
| | | WO | 2016157159 A1 | 06-10-2016 |

EPO FORM P0459

For more details about this annex : see Official Journal of the European Patent Office, No. 12/82